# EUROPEAN PATENT APPLICATION

(11) **EP 4 768 193 A1**
(43) Date of publication of application: **01.07.2026**
(21) Application number: 25226101.1
(22) Date of filing: 20.12.2025
(51) Int. Cl.: B25J 9/00, B25J 9/08, B25J 19/00

(54) **ROBOT**

(30) Priority: 27.12.2024 JP 2024232912
(71) Applicant: Seiko Epson Corporation, Tokyo 160-8801 (JP)
(72) Inventor: SHIMOJIMA, Toshioki, Suwa-shi, Nagano, 392-8502 (JP)
(74) Representative: MERH-IP Matias Erny Reichl Hoffmann Patentanwälte PartG mbB

(57) **Abstract**

There is provided a robot including: a robot arm including a first arm and a second arm that is coupled to the first arm and rotates around a first rotation axis with respect to the first arm, in which the first arm includes a shaft along the first rotation axis and a mounting portion that is disposed on the shaft and detachably coupled to the second arm, the second arm has a notch-shaped shaft insertion hole into which the shaft is inserted from a radial direction of the shaft and which positions the shaft with respect to the second arm, and the shaft is coupled to the second arm via the mounting portion and rotates with respect to at least one of the first arm and the second arm in a state in which the shaft is positioned by the shaft insertion hole.

## Description

The present application is based on, and claims priority from JP Application Serial Number 2024-232912, filed December 27, 2024, the disclosure of which is hereby incorporated by reference herein in its entirety.

### BACKGROUND

### 1. Technical Field

The present disclosure relates to a robot.

### 2. Related Art

A robot described in JP-A-2024-073777 is a so-called "parallel link type robot", and includes a base, a first arm that rotates around a first rotation axis with respect to the base, a second arm that rotates around a second rotation axis parallel to the first rotation axis with respect to the first arm, a first drive source for rotationally driving the first arm, a second drive source for rotationally driving the second arm, and a link mechanism that starts from a base end side of the first arm and is coupled to a distal end side of the first arm via a plurality of links and transmits a rotational force generated by the second drive source to the second arm.

However, in such a robot, attachability/detachability of the second arm with respect to the first arm is not considered at all. Therefore, there is a problem that assemblability and maintainability are low.

### SUMMARY

According to an aspect of the present disclosure, there is provided a robot including:
a robot arm including a first arm and a second arm that is coupled to the first arm and rotates around a first rotation axis with respect to the first arm, in which
the first arm includes a shaft along the first rotation axis and a mounting portion that is disposed on the shaft and detachably coupled to the second arm,
the second arm has a notch-shaped shaft insertion hole into which the shaft is inserted from a radial direction of the shaft and which positions the shaft with respect to the second arm, and
the shaft is coupled to the second arm via the mounting portion and rotates with respect to at least one of the first arm and the second arm in a state in which the shaft is positioned by the shaft insertion hole.

### BRIEF DESCRIPTION OF THE DRAWINGS

FIG. 1 is a perspective view illustrating a robot system according to a first embodiment.
FIG. 2 is a cross-sectional view of a first arm.
FIG. 3 is a cross-sectional view of a base end portion of a third arm.
FIG. 4 is a perspective view of an arm base of a third arm.
FIG. 5 is a cross-sectional view of a distal end portion of a third arm.
FIG. 6 is a cross-sectional view illustrating a procedure of mounting a third arm on the second arm.
FIG. 7 is a cross-sectional view illustrating a procedure of mounting the third arm on the second arm.
FIG. 8 is a front view of a fourth arm.
FIG. 9 is a front view illustrating a procedure of mounting the fourth arm on the third arm.
FIG. 10 is a front view illustrating a procedure of mounting the fourth arm on the third arm.
FIG. 11 is a partial cross-sectional view illustrating the fourth arm.
FIG. 12 is a cross-sectional view of a distal end shaft portion disposed in the fourth arm.
FIG. 13 is a partial cross-sectional view illustrating an intermediate rotation transmission member disposed in the fourth arm.
FIG. 14 is a top view illustrating a disposition of a rotation axis of a motor, a rotation axis of the intermediate rotation transmission member, and a rotation axis of a distal end shaft portion.
FIG. 15 is a partial cross-sectional view illustrating a first drive unit.
FIG. 16 is a side view illustrating a link mechanism.
FIG. 17 is a partial cross-sectional view of a fourth arm included in a robot according to a second embodiment.
FIG. 18 is a side view illustrating a procedure of mounting the fourth arm on the third arm.
FIG. 19 is a side view illustrating a procedure of mounting the fourth arm on the third arm.
FIG. 20 is a side view illustrating a modification example of a shaft insertion hole.
FIG. 21 is a side view illustrating a modification example of the shaft insertion hole.
FIG. 22 is a side view illustrating a modification example of the shaft insertion hole.

### DESCRIPTION OF EMBODIMENTS

Hereinafter, a robot of the present disclosure will be described in detail based on embodiments illustrated in the accompanying drawings. For convenience of description, each of the drawings shows an X-axis, a Y-axis, and a Z-axis which are three axes orthogonal to each other. The Z-axis is aligned along a vertical direction, and the X-axis and the Y-axis are aligned along a horizontal direction. In addition, in the following description, a direction along the X-axis is also referred to as an X-axis direction, a direction along the Y-axis is also referred to as a Y-axis direction, and a direction along the Z-axis is also referred to as a Z-axis direction. In addition, an arrow side of the Z-axis is referred to as an upper side, and the opposite side is referred to as a lower side.

In addition, in the present specification, descriptions of terms "orthogonal", "parallel", "symmetrical", and the like mean that they are "orthogonal", "parallel", "symmetrical", and the like to an extent that a manufacturing error is allowed. Specifically, the term "orthogonal" means substantially orthogonal, and includes a range in which an angle formed by two straight lines or two planes is 80 degrees or more and 100 degrees or less. The term "parallel" means that the two are substantially parallel, and includes a range in which an angle formed by two straight lines or two planes is 0 degrees or more and 10 degrees or less. The term "symmetrical" means that two elements are substantially symmetrical, and includes a range in which a ratio of an overlapping area to a total area of one when one of the two elements is overlapped on the other is 90% or more and 100% or less.

### First Embodiment

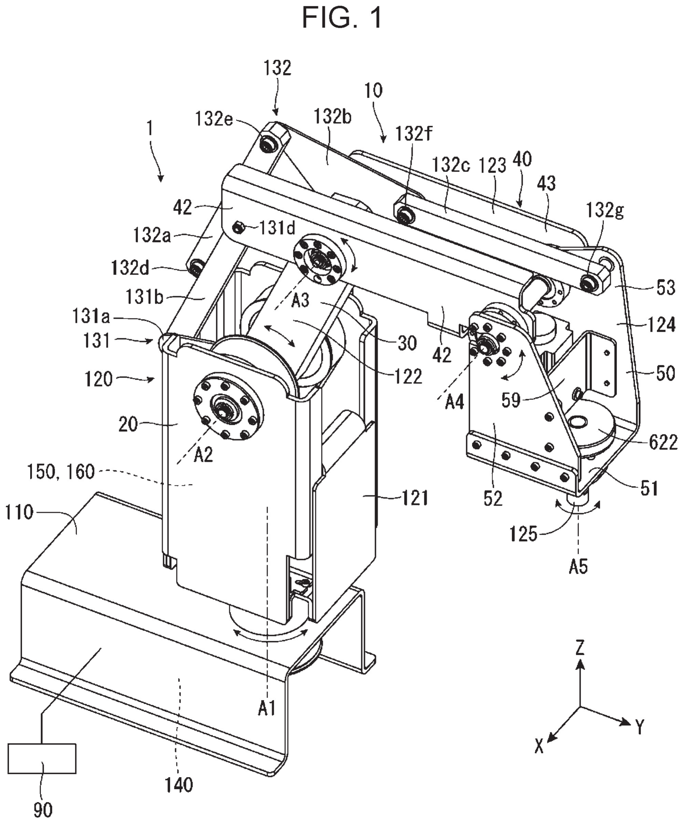

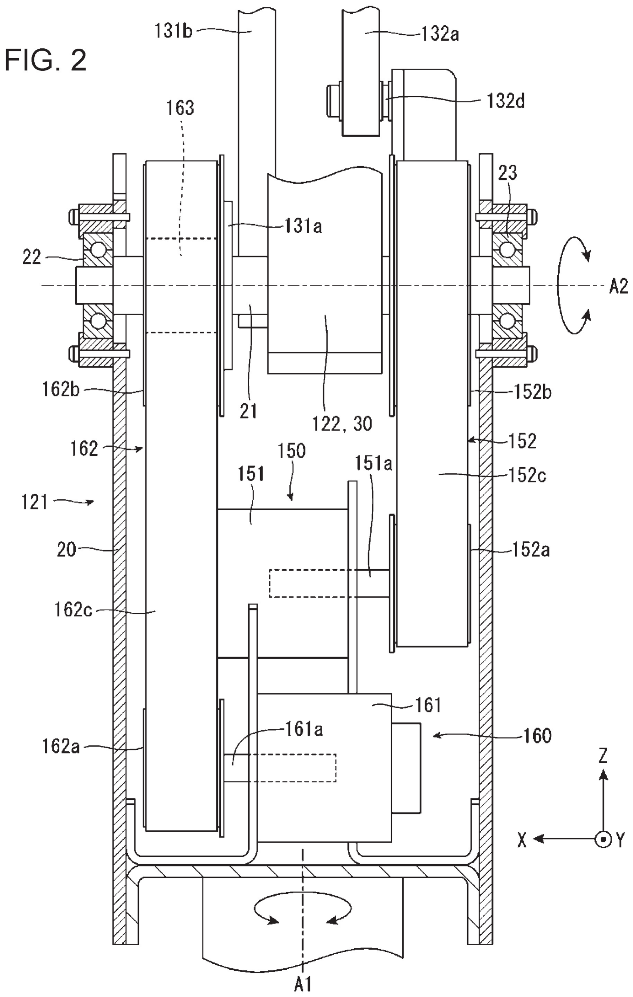

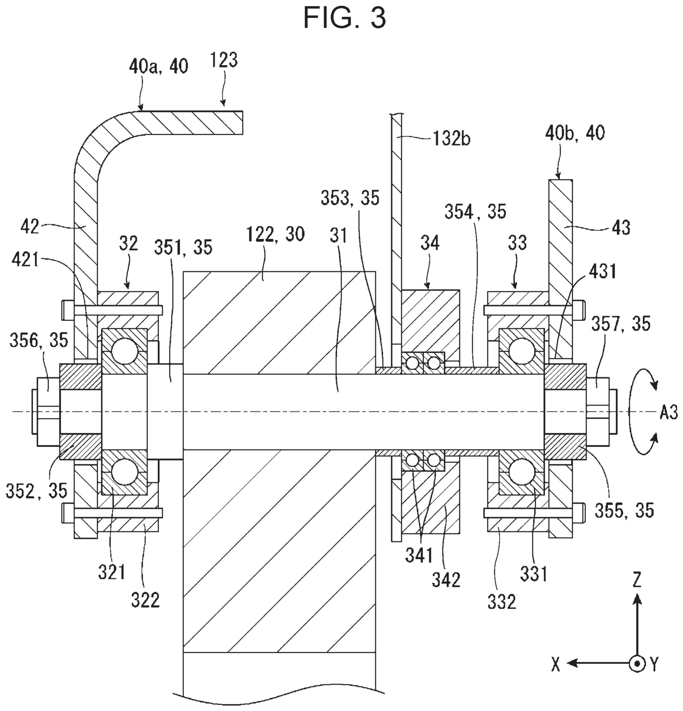

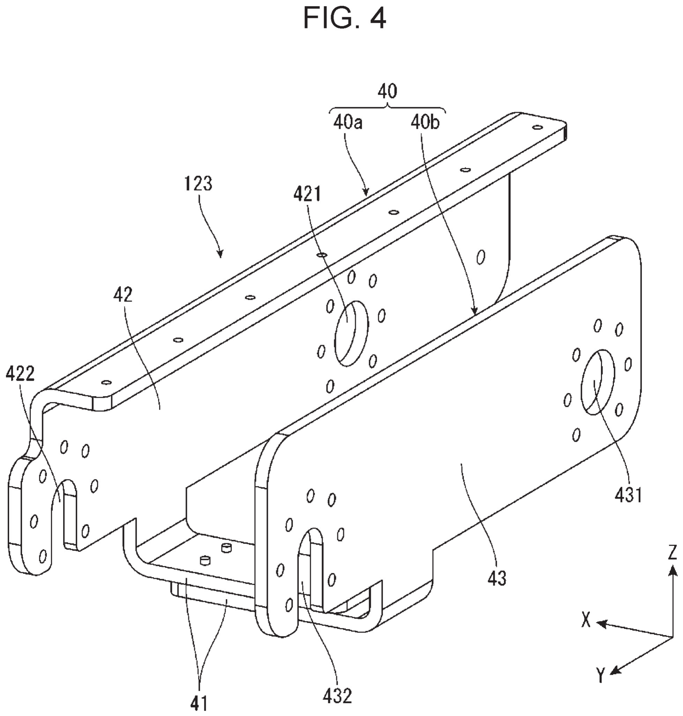

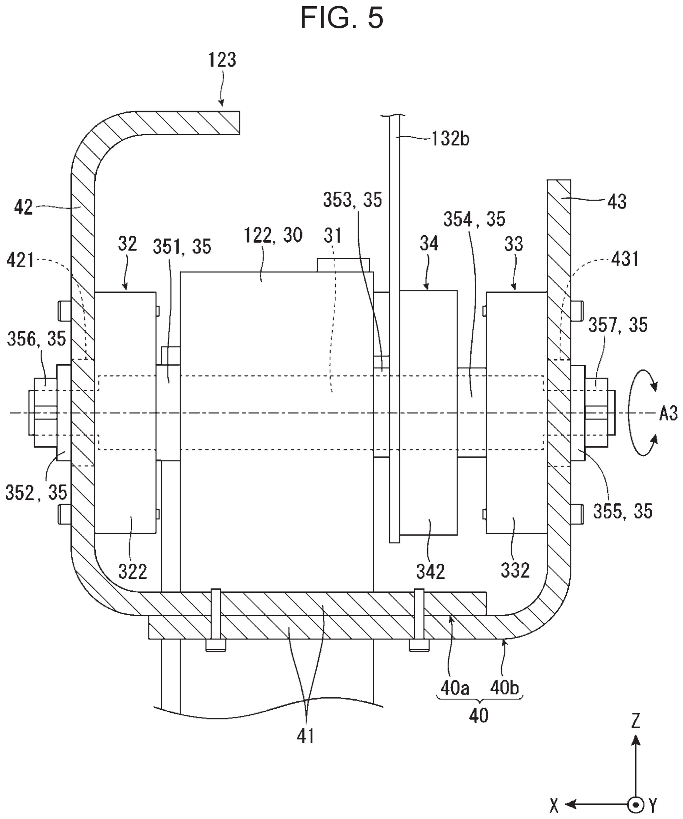

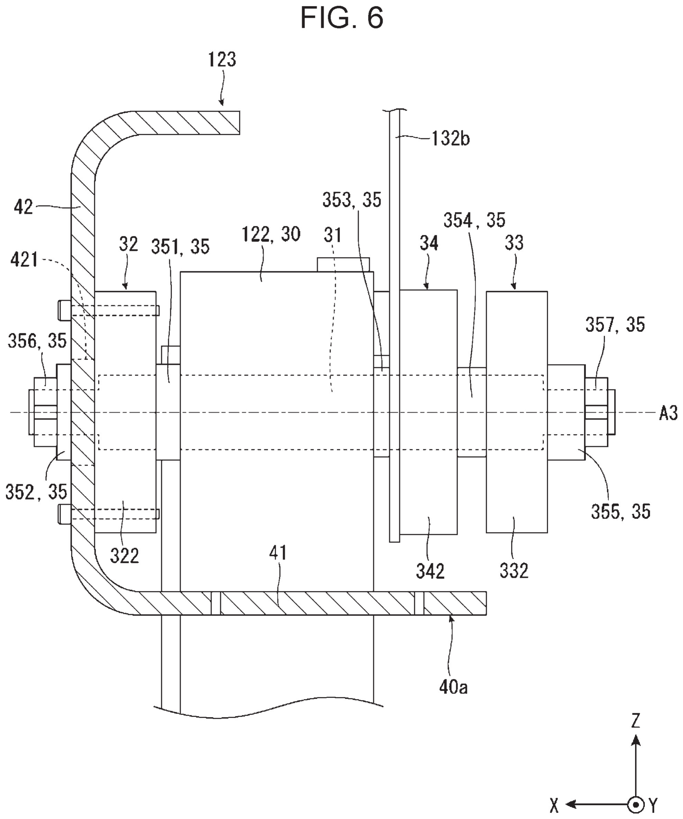

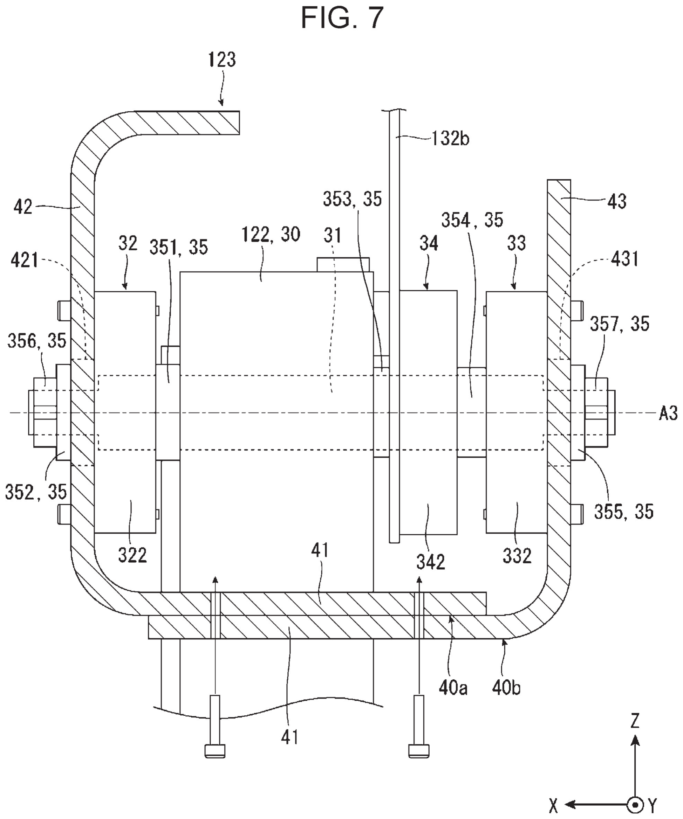

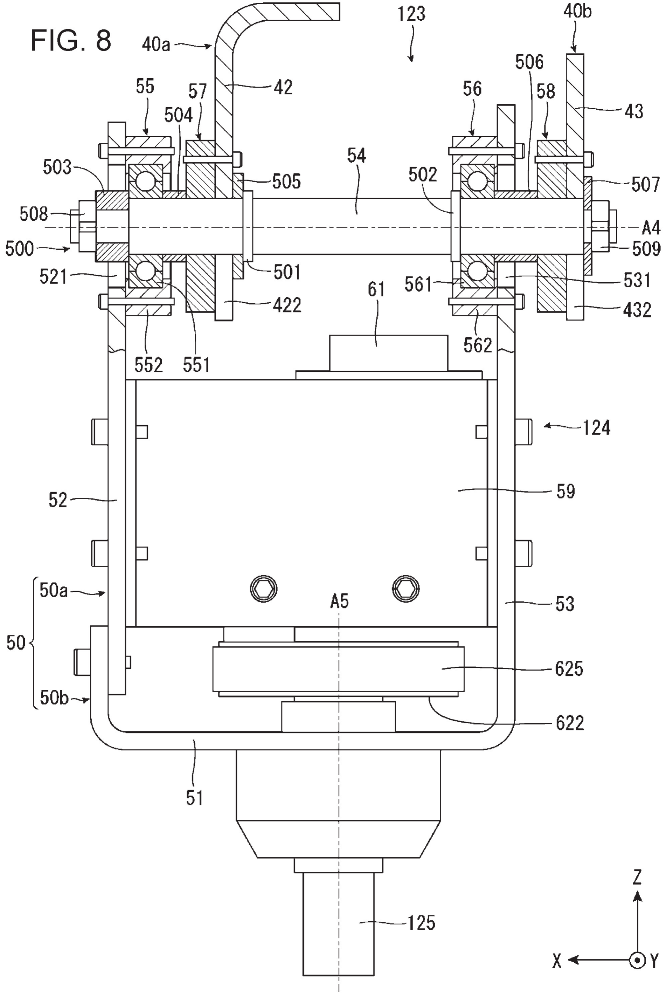

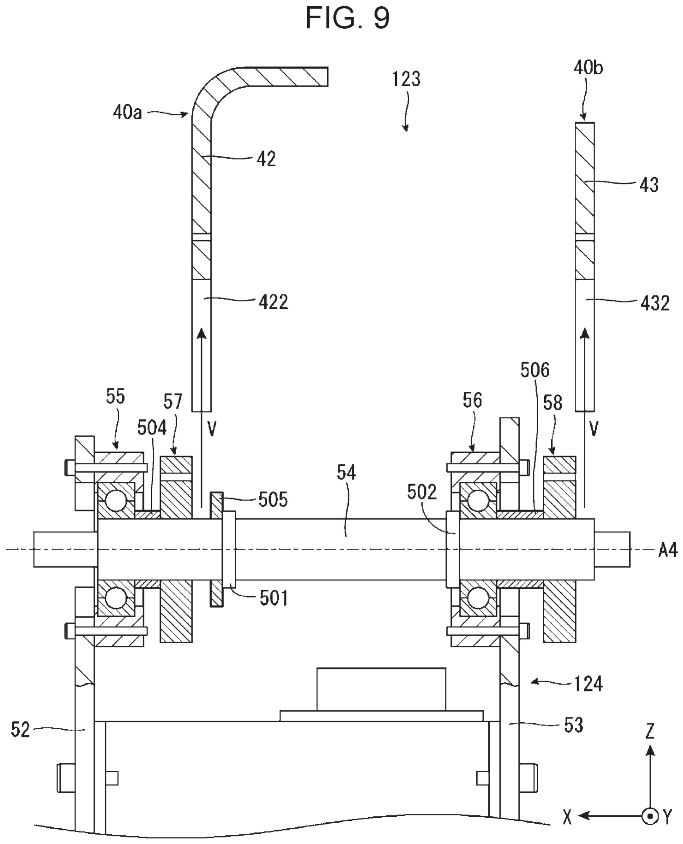

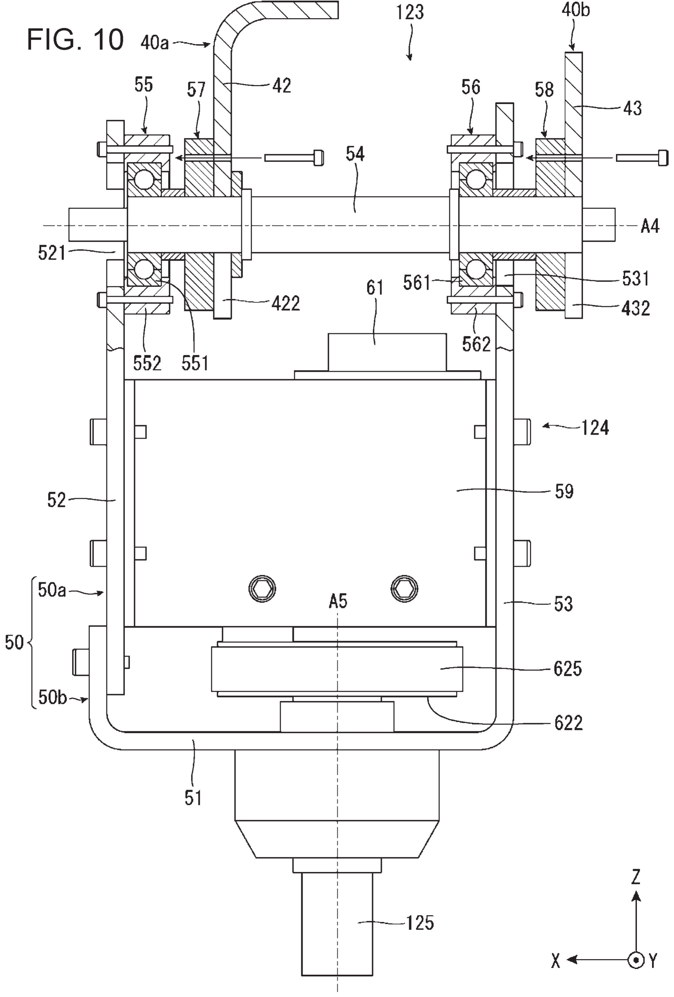

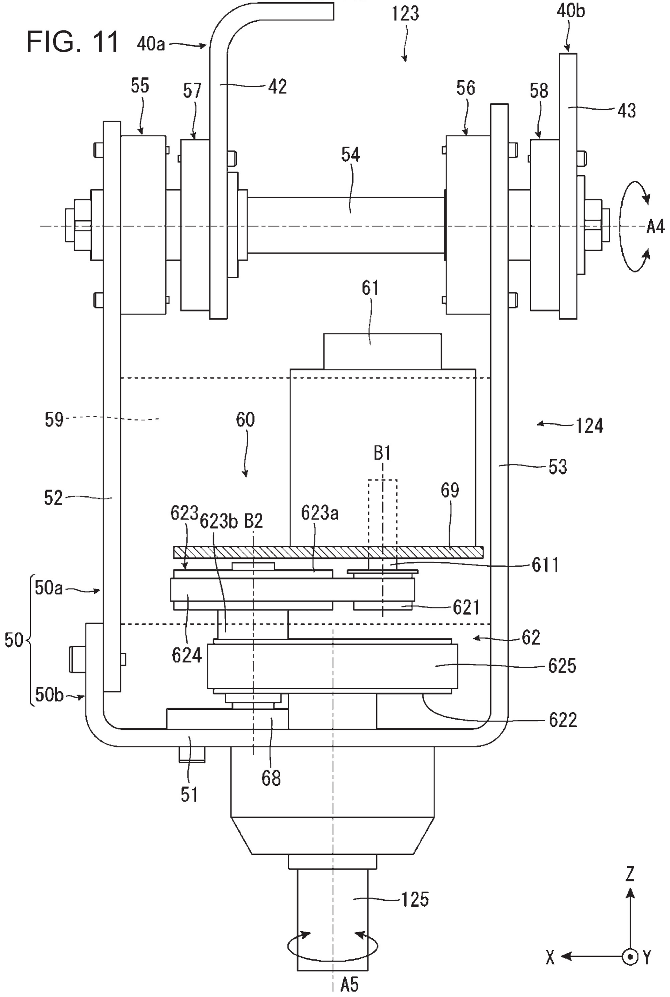

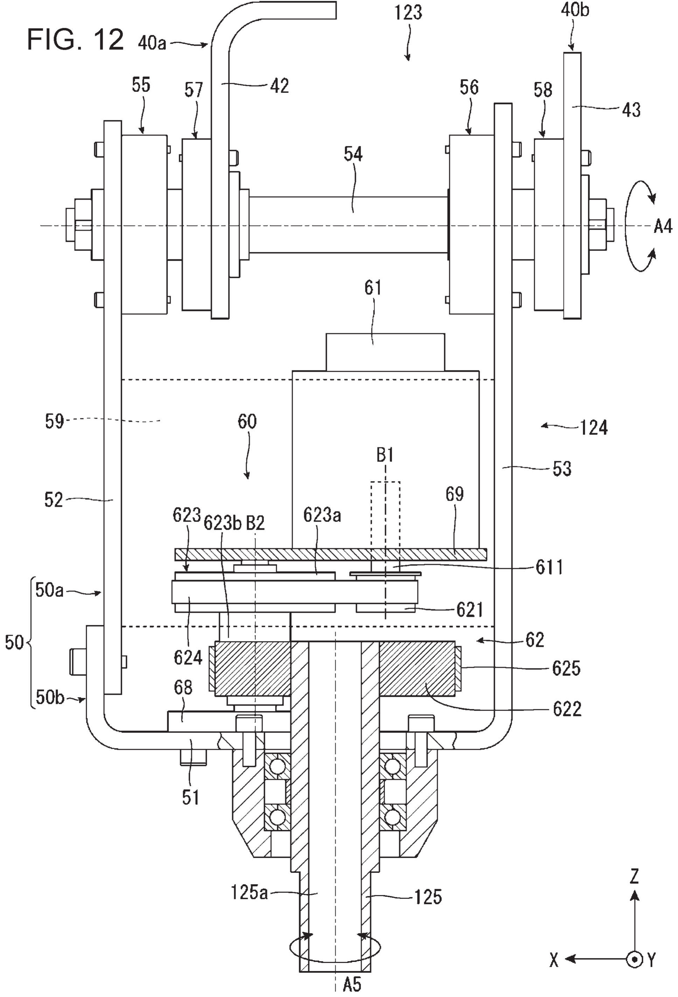

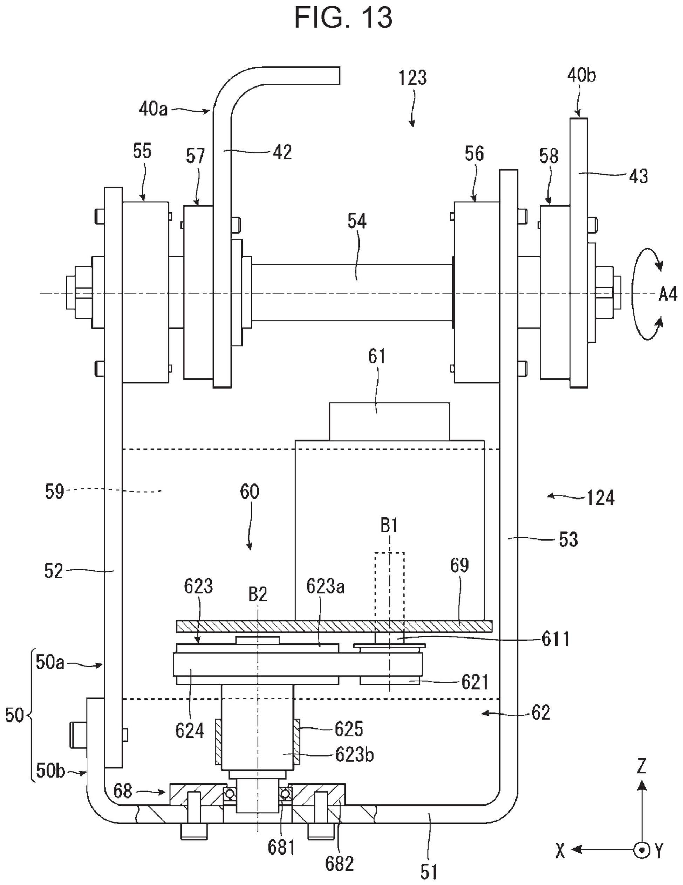

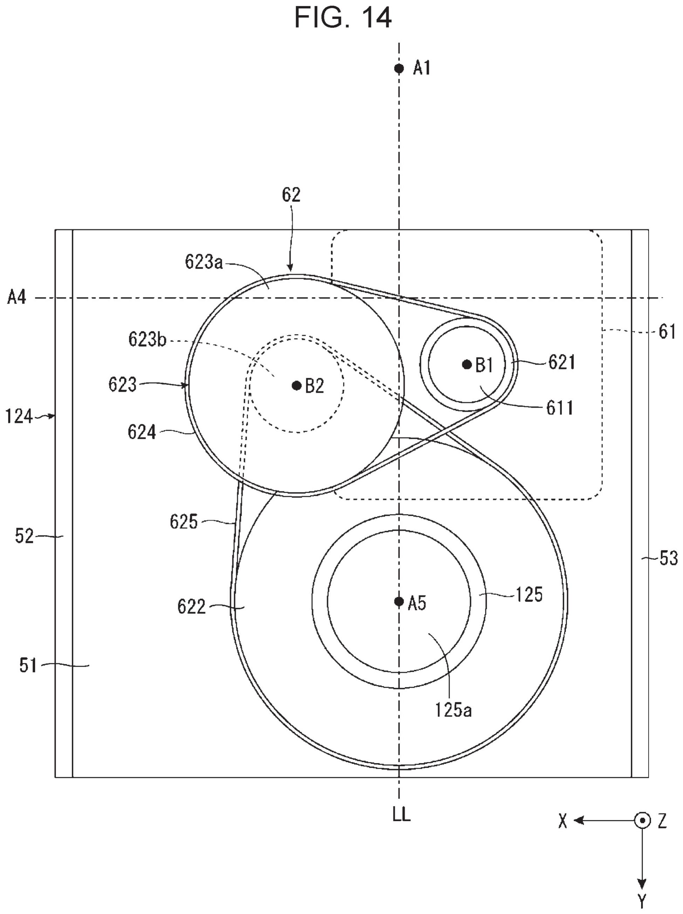

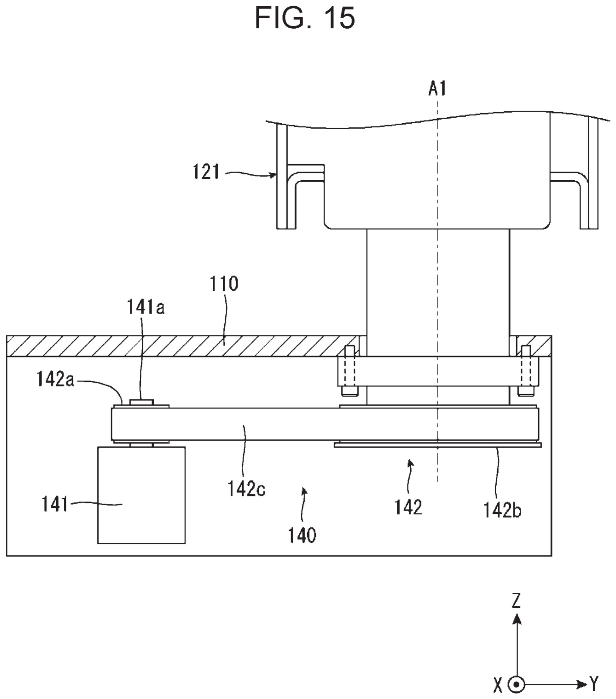

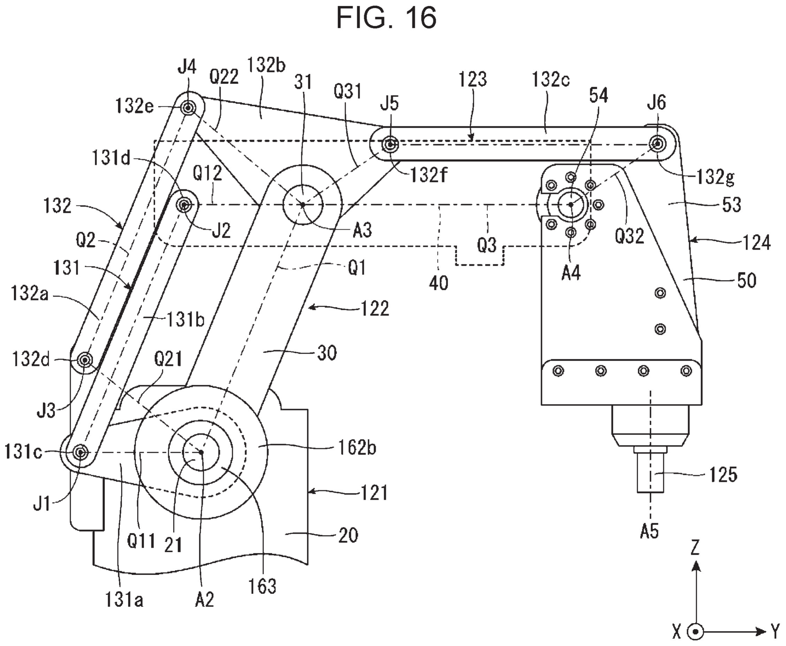

FIG. 1 is a perspective view illustrating a robot system according to a first embodiment. FIG. 2 is a cross-sectional view of a first arm. FIG. 3 is a cross-sectional view of a base end portion of a third arm. FIG. 4 is a perspective view of an arm base of the third arm. FIG. 5 is a cross-sectional view of a distal end portion of the third arm. FIGS. 6 and 7 are cross-sectional views illustrating a procedure of mounting the third arm on a second arm. FIG. 8 is a front view of a fourth arm. FIGS. 9 and 10 are front views illustrating a procedure of mounting the fourth arm on the third arm. FIG. 11 is a partial cross-sectional view illustrating the fourth arm. FIG. 12 is a cross-sectional view of a distal end shaft portion disposed in the fourth arm. FIG. 13 is a partial cross-sectional view illustrating an intermediate rotation transmission member disposed in the fourth arm. FIG. 14 is a top view illustrating a disposition of a rotation axis of a motor, a rotation axis of the intermediate rotation transmission member, and a rotation axis of a distal end shaft portion. FIG. 15 is a partial cross-sectional view illustrating a first drive unit. FIG. 16 is a side view illustrating a link mechanism.

A robot system 1 illustrated in FIG. 1 includes a robot 10 and a control device 90 that controls an operation of each portion of the robot 10.

### Control Device 90

The control device 90 is coupled to the robot 10 in a wired or wireless manner to enable transmission and reception of signals, and controls the operation of each portion of the robot 10. The control device 90 is constituted by, for example, a computer, and includes a processor such as a central processing unit (CPU), a storage portion constituted by a volatile memory such as a random access memory (RAM) and a non-volatile memory such as a read only memory (ROM), and a communication portion that performs transmission and reception of signals with the robot. Various programs executable by the processor are stored in the storage portion, and the processor controls an operation of each portion of the robot 10 by reading and executing the stored programs and the like. In the present embodiment, the control device 90 is disposed outside the robot 10, but the disposition of the control device 90 is not particularly limited, and for example, the control device 90 may be disposed inside the robot 10.

### Robot 10

The robot 10 is a parallel link type multi-joint robot, and is used for manufacturing of food in a broad sense including, for example, food transport, food plating, food packaging, and food processing. In this case, a workpiece in the robot 10 is food or a package of the food. However, the application of the robot 10 and the type of the workpiece are not particularly limited.

The robot 10 includes a base 110 fixed to a floor or the like, and a robot arm 120 rotatably coupled to the base 110. In addition, the robot arm 120 is configured such that a first arm 121, a second arm 122, a third arm 123, and a fourth arm 124 are rotatably coupled in this order from the base 110 side.

Specifically, the robot arm 120 includes the first arm 121 rotatably coupled to the base 110 around a rotation axis A1 along the Z-axis, the second arm 122 rotatably coupled to the first arm 121 around a rotation axis A2 along the X-axis, the third arm 123 rotatably coupled to the second arm 122 around a rotation axis A3 along the X-axis, and the fourth arm 124 rotatably coupled to the third arm 123 around a rotation axis A4 along the X-axis. In addition, a distal end shaft portion 125 that is rotatable around a rotation axis A5 along the Z-axis is disposed in the fourth arm 124. An end effector (not illustrated) for performing a predetermined work on the workpiece is detachably mounted on the distal end shaft portion 125. The end effector may be a constituent element of the robot 10 or may not be the constituent element.

As described above, by constituting the robot arm 120 with the four arms 121, 122, 123, and 124, the number of arms can be reduced, and the manufacturing cost of the robot 10 can be reduced. Therefore, the robot 10 can be provided at a low cost. Next, each of the arms 121 to 124 will be described in this order. In the present embodiment, the fourth arm 124 is a "first arm" of the present disclosure, and the third arm 123 is a "second arm" of the present disclosure. In addition, the rotation axis A4 is a "first rotation axis" of the present disclosure.

### First Arm 121

First, the first arm 121 will be described. The first arm 121 is positioned on an upper side of the base 110 and is rotatable around the rotation axis A1 with respect to the base 110. As illustrated in FIG. 2, the first arm 121 includes an arm base 20. In addition, a shaft 21 extending in the X-axis direction is rotatably held at an upper end portion of the arm base 20 via bearing portions 22 and 23. In the robot 10, the rotation axis A2 is formed by the shaft 21.

### Second Arm 122

Next, the second arm 122 will be described. As illustrated in FIG. 1, the second arm 122 is positioned on a distal end side of the first arm 121 and is rotatable around the rotation axis A2 with respect to the first arm 121. Further, the second arm 122 includes a rod-shaped arm base 30 extending in a direction orthogonal to the rotation axis A2. As illustrated in FIG. 2, a base end portion of the arm base 30 is fixed to the shaft 21. Therefore, the arm base 30 rotates around the rotation axis A2 in combination with the shaft 21. In particular, the arm base 30 is fixed to a portion of the shaft 21 which is positioned between the bearing portions 22 and 23, that is, a central portion of the shaft 21. According to such a configuration, since the arm base 30 is supported from both sides, rotation of the arm base 30 is stabilized. As illustrated in FIG. 3, a shaft 31 extending in the X-axis direction is fixed to a distal end portion of the arm base 30. In the robot 10, the rotation axis A3 is formed by the shaft 31. Further, the arm base 30 supports the shaft 31 at a central portion thereof, that is, a portion excluding both end portions. Therefore, both end portions of the shaft 31 protrude from the arm base 30 in the X-axis direction.

As illustrated in FIG. 3, the second arm 122 includes a first coupling portion 32 and a second coupling portion 33 disposed at both end portions of the shaft 31. The first coupling portion 32 is positioned on a positive side in the X-axis direction with respect to the arm base 30, and the second coupling portion 33 is positioned on a negative side in the X-axis direction with respect to the arm base 30. That is, the first and second coupling portions 32 and 33 are positioned on opposite sides in the X-axis direction with respect to the arm base 30. The third arm 123 is coupled to the arm base 30 to be rotatable around the rotation axis A3 via the first and second coupling portions 32 and 33.

Further, the second arm 122 includes a third coupling portion 34 disposed on the shaft 31 between the arm base 30 and the second coupling portion 33. The link 132b is rotatably coupled to the shaft 31 via the third coupling portion 34. The link 132b will be described in detail in a link mechanism 132 described later.

The first coupling portion 32 includes a first bearing portion 321 into which the shaft 31 is inserted, and a first bearing holding portion 322 that holds the first bearing portion 321, and the first bearing holding portion 322 is rotatable around the rotation axis A3 with respect to the shaft 31. The first bearing holding portion 322 is coupled to the third arm 123. The first bearing portion 321 is a deep groove ball bearing, and includes an inner ring to which the shaft 31 is fixed, an outer ring to which the first bearing holding portion 322 is fixed, and a plurality of balls interposed therebetween.

Similarly, the second coupling portion 33 includes a second bearing portion 331 into which the shaft 31 is inserted and a second bearing holding portion 332 that holds the second bearing portion 331, and the second bearing holding portion 332 is rotatable around the rotation axis A3 with respect to the shaft 31. The second bearing holding portion 332 is coupled to the third arm 123. The second bearing portion 331 is a deep groove ball bearing, and includes an inner ring to which the shaft 31 is fixed, an outer ring to which the second bearing holding portion 332 is fixed, and a plurality of balls interposed therebetween.

Similarly, the third coupling portion 34 includes a third bearing portion 341 into which the shaft 31 is inserted, and a third bearing holding portion 342 that holds the third bearing portion 341, and the third bearing holding portion 342 is rotatable around the rotation axis A3 with respect to the shaft 31. The link 132b is fixed to the third bearing holding portion 342. The third bearing portion 341 is constituted by two deep groove ball bearings provided in parallel, and each of the deep groove ball bearings includes an inner ring to which the shaft 31 is fixed and an outer ring to which the third bearing holding portion 342 is fixed, and a plurality of balls interposed therebetween.

In an industrial robot such as the robot 10, a cross roller bearing that can realize high rigidity and rotation accuracy is often used. However, the cross roller bearing is likely to be increased in size and is also expensive due to a structure thereof. On the other hand, by using the deep groove ball bearings widely used as "rolling bearings" as the first, second, and third bearing portions 321, 331, and 341, the manufacturing cost of the robot 10 can be effectively reduced and robot 10 can be provided at a lower cost. Furthermore, since the deep groove ball bearings have a simple and small structure, a reduction in size and weight of the robot 10 can be accomplished.

However, the configuration of the first and second coupling portions 32 and 33 is not particularly limited as long as the third arm 123 can be rotatably coupled to the shaft 31 around the rotation axis A3. In addition, the configuration of the third coupling portion 34 is not particularly limited as long as the link 132b can be rotatably coupled to the shaft 31 around the rotation axis A3. For example, the first, second, and third bearing portions 321, 331, and 341 may be cylindrical roller bearings, angular ball bearings, or the like.

As illustrated in FIG. 3, the second arm 122 includes a restriction portion 35 that restricts the second arm 122 from being deviated in a direction along the rotation axis A3 of the third arm 123. When the restriction portion 35 is provided, a decrease in positional accuracy due to a deviation can be suppressed. In addition, twisting of each portion can be effectively suppressed, and drive of the robot 10 is stably performed for a long period of time. The restriction portion 35 is not particularly limited, but in the present embodiment, the restriction portion 35 includes a flange 351 protruding from the shaft 31, four annular spacers 352, 353, 354, and 355 mounted on the shaft 31, and nuts 356 and 357 mounted on both end portions of the shaft 31, and the restriction portion 35 is configured to restrict a deviation of the first, second, and third coupling portions 32, 33, and 34 by the components described above.

Specifically, the flange 351 is positioned between the first coupling portion 32 and the arm base 30, and the spacer 352 is positioned on an outer side of the first coupling portion 32, that is, on the positive side in the X-axis direction. Further, the nut 356 is fastened to the shaft 31 on the outer side of the first coupling portion 32. Therefore, by fastening the nut 356, the first coupling portion 32 is pinched between the flange 351 and the spacer 352, and a position of the first coupling portion 32 is fixed.

Furthermore, the spacer 353 is positioned between the arm base 30 and the third coupling portion 34, the spacer 354 is positioned between the third coupling portion 34 and the second coupling portion 33, and the spacer 355 is positioned on an outer side of the second coupling portion 33, that is, on the negative side in the X-axis direction. Further, the nut 357 is fastened to the shaft 31 on the outer side of the second coupling portion 33. Therefore, by fastening the nut 357, the third coupling portion 34 is pinched between the spacers 353 and 354, and a position of the third coupling portion 34 is fixed. Further, the second coupling portion 33 is pinched between the spacers 354 and 355, and a position of the second coupling portion 33 is fixed.

In particular, the flange 351 is formed integrally with the shaft 31 as in the present embodiment and has no deviation from the shaft 31, so that the first, second, and third coupling portions 32, 33, and 34 can be positioned with the flange 351 set as a reference. Therefore, positioning accuracy of the first, second, and third coupling portions 32, 33, and 34 is improved.

### Third Arm 123

Next, the third arm 123 will be described. As described above, in the present embodiment, the third arm 123 constitutes the "second arm" of the present disclosure. As illustrated in FIG. 1, the third arm 123 is positioned on a distal end side of the second arm 122 and is rotatable around the rotation axis A3 with respect to the second arm 122. The third arm 123 includes an arm base 40 extending in a direction orthogonal to the rotation axis A2. As illustrated in FIG. 4, the arm base 40 is formed by bending a sheet metal such as a steel plate, and has a U-shaped half-pipe shape. Specifically, the arm base 40 includes plate-shaped bottom portions 41 and a pair of side plate portions 42 and 43 erected from end portions of the bottom portions 41 on both sides in the X-axis direction toward an upper side. The side plate portions 42 and 43 are disposed side by side in the X-axis direction, and the side plate portion 42 is positioned on the positive side in the X-axis direction with respect to the arm base 30, and the side plate portion 43 is positioned on the negative side in the X-axis direction. Further, the side plate portion 42 further extends toward a base end side as compared with the side plate portion 43, and as illustrated in FIG. 1, a distal end portion of a link 131b is rotatably coupled to a base end portion of the side plate portion 42. The link 131b will be described in a link mechanism 131 described later.

In particular, in the present embodiment, as illustrated in FIGS. 4 and 5, the arm base 40 is configured by integrating two parts, that is, a first base piece 40a having an L-shape including one of bottom portions 41 and the side plate portion 42, and a second base piece 40b having an L-shape including the other bottom portion 41 and the side plate portion 43 by screwing. Specifically, the arm base 40 in which the first and second base pieces 40a and 40b are integrally coupled is configured by overlapping the bottom portions 41 provided in both the first and second base pieces 40a and 40b and fastening the bottom portions with each other with a screw. Therefore, the arm base 40 can be easily separated into the first base piece 40a and the second base piece 40b by detaching the screws. Therefore, as will be described later, the third arm 123 can be easily attached to and detached from the arm base 30, and the assemblability and maintainability of the robot 10 are improved. In particular, by coupling the first and second base pieces 40a and 40b to each other by screwing, the first and second base pieces 40a and 40b can be easily coupled or separated. However, the method of detachably coupling the first and second base pieces 40a and 40b is not particularly limited.

As illustrated in FIGS. 4 and 5, shaft insertion holes 421 and 431 disposed side by side in the X-axis direction are formed in the base end portions of the pair of side plate portions 42 and 43. The shaft insertion holes 421 and 431 are closed holes. As illustrated in FIG. 3, both end portions of the shaft 31 are inserted into the shaft insertion holes 421 and 431. That is, the first base piece 40a is inserted around an end portion of the shaft 31 on the positive side in the X-axis direction from an outer side of the first coupling portion 32, that is, from the positive side in the X-axis direction, and the second base piece 40b is inserted around an end portion of the shaft 31 on the negative side in the X-axis direction from an outer side of the second coupling portion 33, that is, from the negative side in the X-axis direction. Further, the side plate portion 42 and the first bearing holding portion 322 of the first coupling portion 32 are screw-fixed by a plurality of screws around the shaft insertion hole 421, and the side plate portion 43 and the second bearing holding portion 332 of the second coupling portion 33 are screw-fixed by a plurality of screws around the shaft insertion hole 431. As a result, the third arm 123 is rotatably coupled to the shaft 31 around the rotation axis A3.

Here, the side plate portion 42 is positioned on an outer side of the first coupling portion 32, that is, on the positive side in the X-axis direction. Therefore, when the screws that fix the side plate portion 42 and the first bearing holding portion 322 are detached, the first base piece 40a can be pulled out from the shaft 31. Furthermore, since the screws that fix the side plate portion 42 and the first bearing holding portion 322 are fastened from the side plate portion 42 side, and heads of the screws are exposed to the outside, the screws can be easily attached and detached. Similarly, the side plate portion 43 is positioned on an outer side of the second coupling portion 33, that is, on the negative side in the X-axis direction. Therefore, when the screws that fix the side plate portion 43 and the second bearing holding portion 332 are detached, the second base piece 40b can be pulled out from the shaft 31. Furthermore, since the screws that fix the side plate portion 43 and the second bearing holding portion 332 are fastened from the side plate portion 43 side, and heads of the screws are exposed to the outside, the screws can be easily attached and detached. According to such a configuration, the third arm 123 can be easily attached to and detached from the second arm 122, and the assemblability and the maintainability of the robot 10 are improved.

For example, when the third arm 123 is assembled to the second arm 122, first, as shown in FIG. 6, one end portion of the shaft 31 is inserted into the shaft insertion hole 421 of the side plate portion 42 in a state in which the first and second base pieces 40a and 40b are separated, and the side plate portion 42 and the first bearing holding portion 322 are screwed. As a result, the first base piece 40a is mounted on the shaft 31. Next, as illustrated in FIG. 7, the other end portion of the shaft 31 is inserted into the shaft insertion hole 431 of the side plate portion 43, and the side plate portion 43 and the second bearing holding portion 332 are screwed together. As a result, the second base piece 40b is mounted on the shaft 31. Next, the bottom portions 41 of the first and second base pieces 40a and 40b are overlapped with each other and screwed together to be integrated. As described above, the third arm 123 is assembled to the second arm 122. When the third arm 123 is detached from the second arm 122, a reverse procedure may be performed. As described above, the third arm 123 can be attached to and detached from the second arm 122 by attaching and detaching the screws to and from the arm base 40. Therefore, the assemblability and the maintainability of the robot 10 are improved.

In addition, as illustrated in FIGS. 4 and 8, notch-shaped shaft insertion holes 422 and 432 disposed side by side in the X-axis direction are formed in the distal end portion of the pair of side plate portions 42 and 43. A shaft 54 (to be described later) included in the fourth arm 124 is inserted into the shaft insertion holes 422 and 432. Each of the shaft insertion holes 422 and 432 is a long hole that is open to an outer edge of each of the side plate portions 42 and 43. Further, each of the shaft insertion holes 422 and 432 extends in each of directions orthogonal to an extension direction of the third arm 123 and the X-axis direction, and end portions positioned on a lower side in the drawing are open to the outer edges of the side plate portions 42 and 43.

### Fourth Arm 124

Next, the fourth arm 124 will be described. As described above, in the present embodiment, the fourth arm 124 constitutes the "first arm" of the present disclosure. As illustrated in FIG. 1, the fourth arm 124 is positioned on a distal end side of the third arm 123 and is rotatable around the rotation axis A4 as a first rotation axis with respect to the third arm 123. As illustrated in FIG. 8, the fourth arm 124 includes an arm base 50 extending in a direction orthogonal to the rotation axis A4. The arm base 50 is formed by bending a sheet metal such as a steel plate, and has a U-shape. Further, the arm base 50 includes a plate-shaped bottom portion 51 along a horizontal plane, that is, an X-Y plane, and a pair of side plate portions 52 and 53 erected from end portions of the bottom portion 51 on both sides in the X-axis direction toward an upper side. The side plate portions 52 and 53 are disposed side by side in the X-axis direction, and the side plate portion 52 is positioned on the positive side in the X-axis direction with respect to the side plate portion 53. As illustrated in FIG. 1, the side plate portion 53 is formed to be slightly larger than the side plate portion 52, and a distal end portion of the link 132c is rotatably coupled to an upper end portion of the side plate portion 53. The link 132c will be described in the link mechanism 132 described later.

In particular, in the present embodiment, the arm base 50 is configured by integrating two parts, that is, a plate-shaped first base piece 50a including the side plate portion 52 and an L-shaped second base piece 50b including the bottom portion 51 and the side plate portion 53 by screwing. Specifically, the arm base 50 in which the first and second base pieces 50a and 50b are integrated is configured by overlapping the first and second base pieces 50a and 50b in the side plate portion 52 and fastening the overlapped portions with a screw. Therefore, the arm base 50 can be easily separated into the first base piece 50a and the second base piece 50b by detaching the screws. According to such a configuration, a component can be easily attached to and detached from the bottom portion 51, and the assemblability and the maintainability of the robot 10 are improved. However, the configuration of the arm base 50 is not particularly limited, and for example, the bottom portion 51 and the side plate portions 52 and 53 may be integrally formed from one sheet metal.

Further, the fourth arm 124 includes a coupling portion 59 that couples the side plate portions 52 and 53 to each other. The coupling portion 59 is a U-shaped plate member formed by bending a sheet metal such as a steel plate, and both end portions are screw-fixed to the side plate portions 52 and 53. The coupling portion 59 has a function as a reinforcing portion that reinforces the arm base 50 and a function as a support portion that supports a drive unit 60 to be described later.

As illustrated in FIG. 8, shaft insertion holes 521 and 531 disposed side by side in the X-axis direction are formed at upper end portions of the side plate portions 52 and 53. The shaft insertion holes 521 and 531 are long hole-shaped notches that extend in the Y-axis direction, and end portions on a negative side of the Y-axis direction are open to outer edges of the side plate portions 52 and 53. The shaft 54 extending along the X-axis direction is inserted into the shaft insertion holes 521 and 531. The shaft 54 is rotatably held by the side plate portions 52 and 53 via a pair of shaft holding portions 55 and 56. In the robot 10, the rotation axis A4 is formed by the shaft 54. However, the shaft insertion holes 521 and 531 are not particularly limited, and may be, for example, closed holes.

The shaft holding portion 55 includes a bearing portion 551 into which the shaft 54 is inserted, and a bearing holding portion 552 that holds the bearing portion 551, and the bearing holding portion 552 is rotatable around the rotation axis A4 with respect to the shaft 54. The shaft holding portion 55 is screw-fixed to the side plate portion 52 in the bearing holding portion 552. The bearing portion 551 is a deep groove ball bearing, and includes an inner ring to which the shaft 54 is fixed, an outer ring to which the bearing holding portion 552 is fixed, and a plurality of balls interposed therebetween.

Similarly, the shaft holding portion 56 includes a bearing portion 561 into which the shaft 54 is inserted and a bearing holding portion 562 that holds the bearing portion 561, and the bearing holding portion 562 is rotatable around the rotation axis A4 with respect to the shaft 54. The shaft holding portion 56 is screw-fixed to the side plate portion 53 in the bearing holding portion 562. The bearing portion 561 is a deep groove ball bearing, and includes an inner ring to which the shaft 54 is fixed, an outer ring to which the bearing holding portion 562 is fixed, and a plurality of balls interposed therebetween.

As described above, by using the deep groove ball bearing as the bearing portions 551 and 561, the manufacturing cost of the robot 10 can be effectively reduced, and the robot 10 can be provided at a lower cost. Furthermore, since the deep groove ball bearings have a simple and small structure, a reduction in size and weight of the robot 10 can be accomplished. However, the configuration of the shaft holding portions 55 and 56 is not particularly limited as long as the shaft 54 can be rotatably held by the side plate portions 52 and 53. For example, the bearing portions 551 and 561 may be a cylindrical roller bearing, an angular ball bearing, or the like.

Further, the shaft holding portion 55 is positioned on an inner side of the side plate portion 52, that is, on the negative side in the X-axis direction, and the shaft holding portion 56 is positioned on an inner side of the side plate portion 53, that is, on the positive side in the X-axis direction. That is, the shaft holding portions 55 and 56 are positioned between the side plate portions 52 and 53. Therefore, protrusion of the shaft holding portions 55 and 56 to the outside of the arm base 50 is suppressed, and a reduction in size of the fourth arm 124 can be accomplished. In addition, the screw that fixes the side plate portion 52 and the bearing holding portion 552 is fastened from the side plate portion 52 side, and a head of the screw is exposed to an outer side of the arm base 50. Similarly, the screw that fixes the side plate portion 53 and the bearing holding portion 562 is fastened from the side plate portion 53 side, and a head of the screw is exposed to the outer side of the arm base 50. Therefore, it is easy to attach and detach the screws.

As illustrated in FIG. 8, the fourth arm 124 includes a pair of mounting portions 57 and 58 disposed on the shaft 54. One mounting portion 57 is positioned between the shaft holding portions 55 and 56, and the other mounting portion 58 is positioned on an outer side of the shaft holding portion 56, that is, on the negative side in the X-axis direction. That is, the shaft holding portion 55, the mounting portion 57, the shaft holding portion 56, and the mounting portion 58 are disposed in this order on the shaft 54 from the positive side in the X-axis direction, and the shaft holding portions 55 and 56 and the mounting portions 57 and 58 are alternately disposed. However, the disposition of the shaft holding portions 55 and 56 and the mounting portions 57 and 58 is not particularly limited.

The mounting portions 57 and 58 have a flange shape of a disk that protrudes in a radial direction from an outer periphery of the shaft 54. Further, the mounting portions 57 and 58 are formed separately from the shaft 54, and are fixed to the shaft 54 by a method such as screwing. The shaft 54 is detachably coupled to the third arm 123 via the mounting portions 57 and 58. Specifically, the mounting portion 57 is screw-fixed to the side plate portion 42 by a plurality of screws around the shaft 54, and the mounting portion 58 is screw-fixed to the side plate portion 43 by a plurality of screws around the shaft 54. By forming the mounting portions 57 and 58 in a flange shape, the configuration of the mounting portions 57 and 58 is simplified, and the mounting portions 57 and 58 can be easily fixed to the third arm 123 around the shaft 54. Further, by fixing the mounting portions 57 and 58 and the third arm 123 by screwing, the mounting portions 57 and 58 and the third arm 123 can be easily attached and detached.

As described above, the mounting portions 57 and 58 are formed separately from the shaft 54, and thus it is easy to form the mounting portions 57 and 58. In addition, the degree of freedom in a shape and a material of the shaft 54 and the mounting portions 57 and 58 is increased. However, the present disclosure is not limited to this, and for example, at least one of the mounting portions 57 and 58 may be formed integrally with the shaft 54. By forming at least one of the mounting portions 57 and 58 integrally with the shaft 54, the mounting portions 57 and 58 can be easily formed. Further, since the work of fixing at least one of the mounting portions 57 and 58 to the shaft 54 is not required, the robot 10 can be easily assembled. Further, since at least one of the mounting portions 57 and 58 is not deviated with respect to the shaft 54, the drive of the robot 10 is stably performed for a long period of time. In the present embodiment, it is preferable that the mounting portion 58 is not formed integrally with the shaft 54, and only the mounting portion 57 is formed integrally with the shaft 54, so that the work of inserting the bearing portion 561 around the shaft 54 can be easily performed.

Here, a procedure of attaching the fourth arm 124 to the third arm 123 will be described. First, as illustrated in FIG. 9, the shaft 54 is inserted into the pair of shaft insertion holes 422 and 432 formed at a distal end portion of the third arm 123 in the X-axis direction (a radial direction V (a direction orthogonal to the X-axis)). As illustrated in FIG. 10, an outer peripheral surface of the shaft 54 is brought to abut against and come into contact with the bottom portions of the shaft insertion holes 422 and 432. As a result, the shaft 54 is positioned with respect to the third arm 123, and the rotation axis A4 can be disposed at a correct position. Next, the mounting portions 57 and 58 and the arm base 40 are screw-fixed while maintaining this state. That is, the mounting portion 57 and the side plate portion 42 are screwed, and the mounting portion 58 and the side plate portion 43 are screwed. As described above, the fourth arm 124 is attached to the third arm 123. When the fourth arm 124 is detached from the third arm 123, a reverse procedure may be performed. As described above, the fourth arm 124 can be attached to and detached from the third arm 123 only by attaching and detaching the screw to and from the arm base 40. Therefore, the assemblability and the maintainability of the robot 10 are improved. Further, since only the fourth arm 124 can be detached, the maintainability of the fourth arm 124 is improved.

Here, as illustrated in FIG. 10, the mounting portion 57 is positioned on an outer side of the side plate portion 42, that is, on the positive side in the X-axis direction. The screw that fixes the mounting portion 57 and the side plate portion 42 is fastened from the side plate portion 42 side. The shaft holding portion 55 is provided on an outer side of the side plate portion 42, that is, on the positive side in the X-axis direction, and it is difficult to secure a space for screwing. On the other hand, a wider space than the outer side is secured on an inner side of the side plate portion 42. Therefore, as in the present embodiment, by fastening the screw from the side plate portion 42 side, it is easy to secure a space for screwing and the work can be smoothly performed. On the other hand, the mounting portion 58 is positioned on an inner side of the side plate portion 43, that is, on the positive side in the X-axis direction. The screw that fixes the mounting portion 58 and the side plate portion 43 is fastened from the side plate portion 43 side. Therefore, the head of the screw is exposed to an outer side, and the screw can be easily attached and detached. According to such a configuration, the fourth arm 124 can be easily attached to and detached from the third arm 123, and the assemblability and the maintainability of the robot 10 are improved.

Further, as described above, since the mounting portion 57 is disposed between the shaft holding portions 55 and 56, the shaft 54 is fixed to the side plate portion 42 via the mounting portion 57 at a portion between the shaft holding portions 55 and 56. According to such a configuration, a central portion of the shaft 54 is supported by the third arm 123, and thus the shaft 54 is less likely to be bent. Therefore, the rotation axis A4 is less likely to shake, and rotation of the fourth arm 124 is stable.

As illustrated in FIG. 8, the fourth arm 124 includes a restriction portion 500 that restricts a deviation of the fourth arm 124 with respect to the third arm 123 in a direction along the rotation axis A4 of the fourth arm 124. When the restriction portion 500 is provided, a decrease in positional accuracy due to the deviation can be suppressed. In addition, twisting of each portion can be effectively suppressed, and drive of the robot 10 is stably performed for a long period of time. The restriction portion 500 is not particularly limited, but in the present embodiment, the restriction portion 500 includes two flanges 501 and 502 protruding from the shaft 54, five annular spacers 503, 504, 505, 506, and 507 mounted on the shaft 54, and nuts 508 and 509 mounted at both end portions of the shaft 54, and the shaft holding portions 55 and 56 and the mounting portions 57 and 58 are restricted from being deviated by these components.

Specifically, the flange 501 is positioned on an inner side of the side plate portion 42, and further, the spacer 505 is positioned between the side plate portion 42 and the flange 501. In addition, the spacer 504 is positioned between the shaft holding portion 55 and the mounting portion 57, and the spacer 503 is positioned on an outer side of the shaft holding portion 55. The nut 508 is fastened to the shaft 54 from an outer side of the spacer 503. Therefore, by fastening the nut 508, the shaft holding portion 55 and the mounting portion 57 are pinched between the flange 501 and the spacer 503, and positions thereof are fixed.

Further, the flange 502 is positioned inside the shaft holding portion 56, and the spacer 506 is positioned between the shaft holding portion 56 and the mounting portion 58. In addition, the spacer 507 is positioned on an outside of the side plate portion 43, and the nut 509 is fastened to the shaft 54 from an outer side of the spacer 507. Therefore, by fastening the nut 509, the shaft holding portion 56 and the mounting portion 58 are pinched between the flange 502 and the spacer 507, and positions thereof are fixed.

In particular, as in the present embodiment, the flanges 501 and 502 are formed integrally with the shaft 54 and are not deviated with respect to the shaft 54. Therefore, the shaft holding portion 55 and the mounting portion 57 can be positioned with the flange 501 set as a reference, and the shaft holding portion 56 and the mounting portion 58 can be positioned with the flange 502 set as a reference. Therefore, positioning accuracy of the shaft holding portions 55 and 56 and the mounting portions 57 and 58 is improved.

As illustrated in FIGS. 9 and 10, when attaching the fourth arm 124 to the third arm 123, the spacers 503 and 507 and the nuts 508 and 509 positioned at both end portions of the shaft 54 are detached, and after the fourth arm 124 is attached to the third arm 123, the spacers 503 and 507 and the nuts 508 and 509 may be mounted on the shaft 54. Alternatively, the nuts 508 and 509 may be sufficiently loosened instead of detaching the spacers 503 and 507 and the nuts 508 and 509 from the shaft 54.

As illustrated in FIG. 11, the fourth arm 124 includes the distal end shaft portion 125 and the drive unit 60 for rotating the distal end shaft portion 125 around the rotation axis A5. In addition, the drive unit 60 includes a motor 61 including an output shaft 611 and the power transmission portion 62 that transmits rotation of the output shaft 611 to the distal end shaft portion 125.

The distal end shaft portion 125 is rotatably held around a rotation axis A5 along the Z-axis with respect to the bottom portion 51. The rotation axis A5 is parallel to the rotation axis A1 of the first arm 121 and is spaced apart side by side from the rotation axis A1 in the Y-axis direction. That is, the rotation axes A1 and A5 are spaced apart from each other, and a segment connecting the rotation axes A1 and A5 is parallel to the Y-axis. In addition, as illustrated in FIG. 12, the distal end shaft portion 125 is hollow and has a through-hole 125a passing through both end surfaces, that is, an upper surface and a lower surface. According to such a configuration, for example, a wiring or a pipe that leads to the end effector can be routed through the through-hole 125a. Therefore, exposure of the wiring and the pipe around the end effector can be suppressed, and the wiring and the pipe are less likely to interfere with the work.

The motor 61 is, for example, a servo motor, particularly a three-phase motor driven by a three-phase alternating current, and is fixed to the coupling portion 59 via a support portion 69. In addition, the output shaft 611 of the motor 61 rotates around a rotation axis B1 along the Z-axis. The rotation axis B1 is parallel to the rotation axis A1 and is spaced apart from the rotation axis A1.

The power transmission portion 62 is a speed reducer, and includes an input-side rotation transmission member 621 as a first rotation transmission member, an output-side rotation transmission member 622 as a second rotation transmission member, an intermediate rotation transmission member 623, a first annular member 624 wound around the input-side rotation transmission member 621 and the intermediate rotation transmission member 623, and a second annular member 625 wound around the intermediate rotation transmission member 623 and the output-side rotation transmission member 622.

The input-side rotation transmission member 621 is disposed and fixed to the output shaft 611, and rotates around the rotation axis B1 in combination with the output shaft 611. On the other hand, the output-side rotation transmission member 622 is disposed and fixed to the distal end shaft portion 125, and rotates around the rotation axis A5 in combination with the distal end shaft portion 125. The intermediate rotation transmission member 623 is held to be rotatable around a rotation axis B2 along the Z-axis with respect to the bottom portion 51 via the holding portion 68. The rotation axis B2 is parallel to the rotation axis A1 and is spaced apart from the rotation axes A1 and B1. That is, the rotation axes A5, B1, and B2 are parallel to each other and are spaced apart from each other.

As illustrated in FIG. 13, the holding portion 68 includes a bearing portion 681 and a bearing holding portion 682 that holds the bearing portion 681. The holding portion 68 is screw-fixed to the bottom portion 51 in the bearing holding portion 682. The bearing portion 681 is a deep groove ball bearing, and includes an inner ring to which the intermediate rotation transmission member 623 is fixed, an outer ring to which the bearing holding portion 682 is fixed, and a plurality of balls interposed therebetween. As described above, by using the deep groove ball bearing as the bearing portion 681, the manufacturing cost of the robot 10 can be effectively reduced, and the robot 10 can be provided at a lower cost. Furthermore, since the deep groove ball bearings have a simple and small structure, a reduction in size and weight of the robot 10 can be accomplished. However, the configuration of the holding portion 68 is not particularly limited as long as the intermediate rotation transmission member 623 can be held to be rotatable with respect to the bottom portion 51. For example, the bearing portion 681 may be a cylindrical roller bearing, an angular ball bearing, or the like. In addition, for example, the intermediate rotation transmission member 623 may be rotatably held by the support portion 69 via the holding portion 68. In addition, the intermediate rotation transmission member 623 may be rotatably held by the bottom portion 51 and the support portion 69 via a pair of the holding portions 68.

As illustrated in FIG. 13, the intermediate rotation transmission member 623 includes a third rotation transmission member 623a and a fourth rotation transmission member 623b disposed in parallel in the Z-axis direction and concentrically with each other. The third rotation transmission member 623a has a larger diameter as compared with the input-side rotation transmission member 621, that is, an outer diameter is large. Further, the third rotation transmission member 623a is disposed at the same height as in the input-side rotation transmission member 621. The first annular member 624 is wound around the third rotation transmission member 623a and the input-side rotation transmission member 621. The input-side rotation transmission member 621, the third rotation transmission member 623a, and the first annular member 624 constitute a first-stage speed reduction mechanism.

On the other hand, the fourth rotation transmission member 623b has a smaller diameter as compared with the third rotation transmission member 623a and the output-side rotation transmission member 622, that is, an outer diameter is smaller. In addition, the fourth rotation transmission member 623b is disposed at the same height as in the output-side rotation transmission member 622. The second annular member 625 is wound around the fourth rotation transmission member 623b and the output-side rotation transmission member 622. The fourth rotation transmission member 623b, the output-side rotation transmission member 622, and the second annular member 625 constitute a second-stage speed reduction mechanism.

In such a configuration, rotation of the output shaft 611 is transmitted to the third rotation transmission member 623a via the input-side rotation transmission member 621 and the first annular member 624, and the intermediate rotation transmission member 623 rotates around the rotation axis B2. Further, rotation of the intermediate rotation transmission member 623 is transmitted to the output-side rotation transmission member 622 via the fourth rotation transmission member 623b, and the output-side rotation transmission member 622 rotates around the rotation axis A5 in combination with the distal end shaft portion 125. As described above, the power transmission portion 62 includes the total two-stage speed reduction mechanism, so that rotation of the output shaft 611 can be decelerated in two stages and the distal end shaft portion 125 can be rotated with larger torque. Further, since a reduction ratio by the power transmission portion 62 is large, a high-speed rotation type motor 61 can be used. Since a drive current of the high-speed rotation type motor is small and tends to be small, a reduction in size of the motor 61 can be accomplished. Therefore, a distal end weight of the robot arm 120 can be reduced, and a vibration of the robot arm 120 can be effectively suppressed.

However, the configuration of the power transmission portion 62 is not particularly limited as long as rotation of the output shaft 611 can be transmitted to the distal end shaft portion 125. For example, the power transmission portion 62 may not be a speed reducer, and may transmit rotation of the output shaft 611 to the distal end shaft portion 125 at the same speed, or may accelerate the rotation of the output shaft 611 and transmit the rotation to the distal end shaft portion 125.

A combination of each of the rotation transmission members 621, 622, and 623, and each of the annular members 624 and 625 is not particularly limited, and examples thereof include pulley/belt, sprocket/chain, wheel/wire, and the like. In the present embodiment, the pulley/belt is used. According to such a configuration, since the power transmission portion 62 does not use grease, oil, or the like, there is no concern that the grease, oil, or the like scatters to the workpiece. Therefore, the robot 10 can be suitably used for manufacturing food.

As illustrated in FIG. 14, in a plan view from a direction along the rotation axis A5 (Z-axis), the rotation axis A5 and the rotation axis A1 are disposed side by side in the Y-axis direction. In addition, the rotation axis B1 of the output shaft 611 and the rotation axis B2 of the intermediate rotation transmission member 623 are positioned on opposite sides with respect to a virtual straight line LL connecting the rotation axis A5 and the rotation axis A1. In the present embodiment, the rotation axis B2 is positioned on the positive side in the X-axis direction of the virtual straight line LL, and the rotation axis B1 is positioned on the negative side in the X-axis direction. By such a disposition, the distal end shaft portion 125, the motor 61, and the power transmission portion 62 can be disposed on the fourth arm 124 in a well-balanced manner, and a weight difference between a portion on the positive side in the X-axis direction with respect to the virtual straight line LL and a portion on the negative side in the X-axis direction with respect to the virtual straight line LL can be suppressed. Therefore, twisting of the robot arm 120 during drive can be effectively suppressed, and stability of the robot 10, that is, operation accuracy is improved. As a result, a tact time of a work can be shortened, and productivity is improved.

In addition, in a plan view from a direction along the rotation axis A5 (Z-axis), each of the rotation axes B1 and B2 is positioned between the rotation axis A5 and the rotation axis A1 in the Y-axis direction. In other words, each of the rotation axes B1 and B2 is positioned on the rotation axis A1 side with respect to the rotation axis A5. According to such a configuration, the center of gravity of the fourth arm 124 can be shifted toward the rotation axis A1 side, and the inertia of the robot arm 120 around the rotation axis A1 is reduced. Therefore, load torque of the robot arm 120 is reduced, and the stability of the robot 10 is improved. However, the present disclosure is not limited thereto, and for example, at least one of the rotation axes B1 and B2 may not be between the rotation axis A5 and the rotation axis A1.

In addition, in a plan view from a direction along the rotation axis A5 (Z-axis), the rotation axis A4 is positioned between the rotation axis A5 and the rotation axis A1. The rotation axes B1 and B2 are positioned between the rotation axis A5 and the rotation axis A4 in the Y-axis direction. According to such a configuration, the motor 61 and the intermediate rotation transmission member 623 are not excessively spaced apart from the rotation axis A5. Therefore, the distal end shaft portion 125, the motor 61, and the intermediate rotation transmission member 623 can be disposed in a compact manner, and a reduction in size of the fourth arm 124 can be accomplished. However, the present disclosure is not limited thereto, and for example, at least one of the rotation axes B1 and B2 may not be between the rotation axis A5 and the rotation axis A4.

In particular, in the present embodiment, each of the rotation axes B1 and B2 is disposed to be biased toward the rotation axis A4 side with respect to the rotation axis A5. That is, in the Y-axis direction, a separation distance between the rotation axis B1 and the rotation axis A4 is shorter than a separation distance between the rotation axis B1 and the rotation axis A5, and a separation distance between the rotation axis B2 and the rotation axis A4 is shorter than the separation distance between the rotation axis B2 and the rotation axis A5. According to such a configuration, the rotation axis A5 and the rotation axes B1 and B2 are appropriately spaced apart from each other, and the outer diameter of the output-side rotation transmission member 622 and the third rotation transmission member 623a can be easily increased. Therefore, the power transmission portion 62 can be a speed reducer having a larger reduction ratio.

In addition, in a plan view from a direction along the rotation axis A5 (Z-axis), the rotation axis B2 is positioned between the rotation axis A5 and the rotation axis B1 in the Y-axis direction. That is, in the Y-axis direction, a separation distance between the rotation axis B2 and the rotation axis A5 is shorter than a separation distance between the rotation axis B1 and the rotation axis A5. According to such a configuration, the intermediate rotation transmission member 623, which is likely to have a larger shape in a plan view as compared with the motor 61, is less likely to protrude from the arm base 50. Therefore, contact between the intermediate rotation transmission member 623 and the other parts is suppressed, and the drive of the robot 10 is stabilized. However, the present disclosure is not limited thereto, and the rotation axis B2 may not be positioned between the rotation axis A5 and the rotation axis B1.

In addition, in a plan view from a direction along the rotation axis A5 (Z-axis), an upper side of the through-hole 125a formed in the distal end shaft portion 125, that is, an opening on the base end side does not overlap the power transmission portion 62. That is, when viewed from the upper side (a positive side in the Z-axis direction), the upper opening of the through-hole 125a is exposed from the motor 61, the input-side rotation transmission member 621, the output-side rotation transmission member 622, the intermediate rotation transmission member 623, the first annular member 624, and the second annular member 625 that constitute the power transmission portion 62. With such a configuration, the wiring and the pipe can be easily routed to the through-hole 125a. However, the present disclosure is not limited thereto, and at least a part of the upper opening of the through-hole 125a may overlap with the motor 61 or the power transmission portion 62.

Hereinbefore, the arms 121 to 124 are described.

As illustrated in FIG. 1, the robot 10 further includes a first drive unit 140 for rotating the first arm 121 around the rotation axis A1 with respect to the base 110, a second drive unit 150 for rotating the second arm 122 around the rotation axis A2 with respect to the first arm 121, and a third drive unit 160 for rotating the third arm 123 around the rotation axis A3 with respect to the second arm 122. The robot 10 includes the link mechanism 131 for transmitting power output by the third drive unit 160 to the third arm 123, and the link mechanism 132 for keeping the fourth arm 124 in a constant posture regardless of the postures of the second arm 122 and the third arm 123. The term "constant posture" means a posture in which the rotation axis A5 is along the Z-axis as illustrated in FIG. 1.

As illustrated in FIG. 15, the first drive unit 140 is disposed inside the base 110. The first drive unit 140 includes a motor 141 including an output shaft 141a that rotates around the Z-axis, and a power transmission portion 142 that transmits rotation of the motor 141 to the first arm 121.

The motor 141 is, for example, a servo motor, particularly a three-phase motor driven by a three-phase alternating current, and is fixed to the base 110.

The power transmission portion 142 is a speed reducer, and includes an input-side rotation transmission member 142a fixed to the output shaft 141a, an output-side rotation transmission member 142b fixed to the first arm 121 and having a larger diameter as compared with the input-side rotation transmission member 142a, and an annular member 142c wound around the input-side rotation transmission member 142a and the output-side rotation transmission member 142b. A combination of the input-side and output-side rotation transmission members 142a and 142b and the annular member 142c is not particularly limited, and examples thereof include pulley/belt, sprocket/chain, wheel/wire, and the like. In the present embodiment, the pulley/belt is used.

In such a configuration, rotation of the output shaft 141a is transmitted to the output-side rotation transmission member 142b via the input-side rotation transmission member 142a and the annular member 142c, and the output-side rotation transmission member 142b and the first arm 121 integrally rotate around the rotation axis A1. As described above, by using the speed reducer as the power transmission portion 142, rotation of the output shaft 141a can be decelerated and the first arm 121 can be rotated with sufficiently large torque.

Hereinbefore, the first drive unit 140 is described, but the configuration of the first drive unit 140 is not particularly limited. For example, the power transmission portion 142 may be a gear device such as a planetary gear or a wave gear. In addition, for example, in the present embodiment, the power transmission portion 142 is constituted by a single-stage speed reducer, but may be constituted by a two-stage or more speed reducer. When briefly describing an example of the two-stage speed reducer, for example, a first speed reducer may be obtained by disposing an intermediate rotation transmission member including a first rotation transmission member having a larger diameter as compared with the input-side rotation transmission member 142a and a second rotation transmission member having a smaller diameter as compared with the output-side rotation transmission member 142b between the input-side rotation transmission member 142a and the output-side rotation transmission member 142b to be rotatable around the Z-axis and winding an annular member around the input-side rotation transmission member 142a and the first rotation transmission member, and a second speed reducer may be obtained by winding an annular member around the second rotation transmission member and the output-side rotation transmission member 142b, thereby obtaining a two-stage speed reducer. Similarly, two or more intermediate rotation transmission members may be disposed to form a three-stage or more speed reducer.

As illustrated in FIG. 2, each of the second drive unit 150 and the third drive unit 160 is disposed in the first arm 121. The second drive unit 150 and the third drive unit 160 have the same configuration as in the first drive unit 140 described above.

The second drive unit 150 includes a motor 151 including an output shaft 151a that rotates around the X-axis, and a power transmission portion 152 that transmits rotation of the motor 151 to the second arm 122. The motor 151 is, for example, a servo motor, particularly a three-phase motor driven by a three-phase alternating current, and is fixed to the arm base 20.

The power transmission portion 152 is a speed reducer, and includes an input-side rotation transmission member 152a fixed to the output shaft 151a, an output-side rotation transmission member 152b fixed to the shaft 21 and having a larger diameter as compared with the input-side rotation transmission member 152a, and an annular member 152c wound around the input-side rotation transmission member 152a and the output-side rotation transmission member 152b. A combination of the input-side and output-side rotation transmission members 152a and 152b and the annular member 152c is not particularly limited, and examples thereof include pulley/belt, sprocket/chain, wheel/wire, and the like. In the present embodiment, the pulley/belt is used.

In such a configuration, rotation of the output shaft 151a is transmitted to the output-side rotation transmission member 152b via the input-side rotation transmission member 152a and the annular member 152c, and the output-side rotation transmission member 152b and the shaft 21 integrally rotate around the rotation axis A2. As a result, the second arm 122 fixed to the shaft 21 rotates around the rotation axis A2 with respect to the first arm 121. As described above, by using the speed reducer as the power transmission portion 152, rotation of the output shaft 151a can be decelerated and the second arm 122 can be rotated with sufficiently large torque.

Hereinbefore, the second drive unit 150 is described, but the configuration of the second drive unit 150 is not particularly limited. For example, the power transmission portion 152 may be a gear device such as a planetary gear or a wave gear. In addition, for example, in the present embodiment, the power transmission portion 152 is constituted by a single-stage speed reducer, but may be constituted by a two-stage or more speed reducer as in the first drive unit 140 described above.

As illustrated in FIG. 2, the third drive unit 160 includes a motor 161 including an output shaft 161a that rotates around the X-axis, and a power transmission portion 162 that transmits rotation of the motor 161 to the third arm 123 via the link mechanism 131. The motor 161 is, for example, a servo motor, particularly a three-phase motor driven by a three-phase alternating current, and is fixed to the arm base 20.

The power transmission portion 162 is a speed reducer, and includes an input-side rotation transmission member 162a fixed to the output shaft 161a, an output-side rotation transmission member 162b that is rotatably held by the shaft 21 via the bearing portion 163 and has a larger diameter as compared with the input-side rotation transmission member 162a, and an annular member 162c wound around the input-side rotation transmission member 162a and the output-side rotation transmission member 162b. A combination of the input-side and output-side rotation transmission members 162a and 162b, and the annular member 162c is not particularly limited, and examples thereof include pulley/belt, sprocket/chain, wheel/wire, and the like. In the present embodiment, the pulley/belt is used.

With such a configuration, rotation of the output shaft 161a is transmitted to the output-side rotation transmission member 162b via the input-side rotation transmission member 162a and the annular member 162c, and the output-side rotation transmission member 162b rotates around the rotation axis A2 with respect to the shaft 21. Rotation of the output-side rotation transmission member 162b is transmitted to the third arm 123 via the link mechanism 131, and the third arm 123 rotates around the rotation axis A3 with respect to the second arm 122. As described above, by using the speed reducer as the power transmission portion 162, rotation of the output shaft 161a can be decelerated and the third arm 123 can be rotated with sufficiently large torque.

Hereinbefore, the third drive unit 160 is described, but the configuration of the third drive unit 160 is not particularly limited. For example, the power transmission portion 162 may be a gear device such as a planetary gear or a wave gear. In addition, for example, in the present embodiment, the power transmission portion 162 is constituted by a single-stage speed reducer, but may be constituted by a two-stage or more speed reducer as in the first drive unit 140 described above.

As illustrated in FIG. 16, the link mechanism 131 for transmitting rotation of the output-side rotation transmission member 162b to the third arm 123 includes a link 131a, a link 131b, and pivots 131c and 131d.

The link 131a has a plate shape with the X-axis set as a normal line, and extends in a direction orthogonal to the rotation axis A2. The link 131a is fixed to the output-side rotation transmission member 162b of the power transmission portion 162 at a base end portion thereof. Further, the link 131b is a rod-shaped member extending in a direction orthogonal to the rotation axis A2, and is provided in parallel with the second arm 122. The link 131b is coupled to a distal end portion of the link 131a to be rotatable around an axis J1 parallel to the rotation axis A2 via the pivot 131c at a base end portion of the link 131b. Note that the axis J1 is spaced apart from the rotation axis A2. Further, the link 131b is coupled to the base end portion of the third arm 123 to be rotatable around an axis J2 parallel to the rotation axis A3 via the pivot 131d at a distal end portion thereof. The axis J2 is spaced apart from the rotation axis A3.

In the link mechanism 131, a parallelogram Q1 in which the rotation axes A2 and A3 and the axes J1 and J2 are set as vertices is formed in a plan view from the X-axis direction. In such a parallelogram Q1, a straight line Q11 connecting the rotation axis A2 and the axis J1 and a straight line Q12 connecting the rotation axis A3 and the axis J2 are maintained in a parallel state even by deformation. Therefore, when the link 131a rotates around the rotation axis A2, the third arm 123 rotates around the rotation axis A3 while keeping the straight lines Q11 and Q12 parallel to each other.

Hereinbefore, the link mechanism 131 is described, but the configuration of the link mechanism 131 is not particularly limited as long as the third arm 123 can be rotated around the rotation axis A3 with respect to the second arm 122.

Next, the link mechanism 132 will be described. As illustrated in FIG. 16, the link mechanism 132 is a mechanism for keeping the posture of the fourth arm 124 constant such that the rotation axis A5 always follows the Z-axis regardless of the postures of the second arm 122 and the third arm 123. The link mechanism 132 includes links 132a, 132b, and 132c, and pivots 132d, 132e, 132f, and 132g.

The link 132a is a rod-shaped member extending in a direction orthogonal to the rotation axis A2, and is provided in parallel with the second arm 122. The link 132a is coupled to an upper end portion of the first arm 121 to be rotatable around an axis J3 parallel to the rotation axis A2 via the pivot 132d at a base end portion thereof. An axis J3 is spaced apart from the rotation axis A2.

The link 132b has a plate shape of a triangle in which the X-axis is set as a normal line, and is rotatably held by the shaft 31 via the third coupling portion 34 at one corner portion. Further, the link 132b is coupled to a distal end portion of the link 132a to be rotatable around an axis J4 parallel to the rotation axis A3 via the pivot 132e at a corner portion positioned on a base end side of the link 132b. The axis J4 is spaced apart from the rotation axis A3.

The link 132c is a rod-shaped member extending in a direction orthogonal to the rotation axis A3, and is provided in parallel with the third arm 123. The link 132c is coupled to a corner portion on the distal end side of the link 132b to be rotatable around an axis J5 parallel to the rotation axis A3 via the pivot 132f at the base end portion of the link 132c. The axis J5 is spaced apart from the rotation axis A3. Further, the link 132c is coupled to a base end portion of the fourth arm 124 to be rotatable around an axis J6 parallel to the rotation axis A4 via the pivot 132g at the distal end portion thereof. The axis J6 is spaced apart from the rotation axis A4. That is, the link 132c couples a position deviated from the rotation axis A3 of the link 132b and a position deviated from the rotation axis A4 of the fourth arm 124.

In the link mechanism 132, a parallelogram Q2 in which the rotation axes A2 and A3 and the axes J3 and J4 are set as vertices is formed in a plan view from the X-axis direction. In such a parallelogram Q2, a straight line Q21 connecting the rotation axis A2 and the axis J3 and a straight line Q22 connecting the rotation axis A3 and the axis J4 are maintained in a parallel state even by deformation. Further, in a plan view from the X-axis direction, a parallelogram Q3 in which the rotation axes A3 and A4 and the axes J5 and J6 are set as vertices is formed. In such a parallelogram, a straight line Q31 connecting the rotation axis A3 and the axis J5 and a straight line Q32 connecting the rotation axis A4 and the axis J6 are maintained in a parallel state even by deformation.

In addition, an inclination of the straight line Q21 with respect to the Z-axis is constant regardless of postures of the second and third arms 122 and 123. Therefore, the straight line Q22 that forms a pair with the straight line Q21 is also constant regardless of the postures of the second and third arms 122 and 123, and as a result, the posture of the link 132b is also constant. Further, since the posture of the link 132b is constant, the pair of straight lines Q31 and Q32 are also constant regardless of the postures of the second and third arms 122 and 123. Therefore, regardless of the postures of the second and third arms 122 and 123, the fourth arm 124 is maintained at a constant posture, that is, a posture in which the rotation axis A5 is along the Z-axis. As described above, with a configuration of mechanically keeping the posture of the fourth arm 124 to be constant, it is not necessary to perform electrical control, and the control of the robot 10 becomes easy. The phrase "keeping the posture of the fourth arm 124 to be constant" means that a slight change in the posture, for example, a change in a range of 5 degrees or less with respect to the Z-axis is allowed.

Hereinbefore, the link mechanism 132 is described. In such a link mechanism 132, the link 132b is coupled to the shaft 31 at a portion between the first coupling portion 32 and the second coupling portion 33. According to such a configuration, protrusion of the link 132b to the third arm 123 side is suppressed, and thus a reduction in size of the robot 10 can be accomplished. In addition, the center of gravity of the robot arm 120 is less likely to be deviated in the X-axis direction with respect to the rotation axis A1, and the weight balance of the robot arm 120 is improved.

In addition, the link 132c overlaps the third arm 123 in a plan view from a direction orthogonal to the X-axis direction, which is a direction along the rotation axis A3, and a direction in which the rotation axes A3 and A4 are arranged, that is, a longitudinal direction of the third arm 123. That is, the link 132c is positioned between the side plate portions 42 and 43. According to such a configuration, protrusion of the link 132c to the third arm 123 side is suppressed, and thus a reduction in size of the robot 10 can be accomplished. In addition, the center of gravity of the robot arm 120 is less likely to be deviated in the X-axis direction with respect to the rotation axis A1, and the weight balance of the robot arm 120 is improved.

Hereinbefore, the robot system 1 is described. As described above, the robot 10 included in the robot system 1 includes the robot arm 120 including the fourth arm 124 that is a first arm and the third arm 123 that is a second arm coupled to the fourth arm 124 and rotating around the rotation axis A4 that is a first rotation axis with respect to the fourth arm 124. The fourth arm 124 includes the shaft 54 disposed along the rotation axis A4 and the mounting portions 57 and 58 disposed on the shaft 54 and detachably coupled to the third arm 123. In addition, the third arm 123 has notch-shaped shaft insertion holes 422 and 432 into which the shaft 54 is inserted from the radial direction V of the shaft 54 and which position the shaft 54 with respect to the third arm 123. The shaft 54 is coupled to the third arm 123 via the mounting portions 57 and 58 in a state of being positioned by the shaft insertion holes 422 and 432, and rotates with respect to at least one of the fourth arm 124 and the third arm 123 (in the present embodiment, the fourth arm 124). With such a configuration, the fourth arm 124 can be easily attached to and detached from the third arm 123. Therefore, the assemblability and the maintainability of the robot 10 are improved.

Further, as described above, the mounting portions 57 and 58 are flange-shaped portions that protrude in the radial direction of the shaft 54 with respect to the shaft 54. According to such a configuration, the configurations of the mounting portions 57 and 58 are simplified, and the mounting portions 57 and 58 can be easily fixed to the third arm 123 around the shaft 54.

Further, the mounting portions 57 and 58 are formed separately from the shaft 54. With such a configuration, the mounting portions 57 and 58 can be easily formed. Furthermore, the degree of freedom in the shape and material of the shaft 54 and the mounting portions 57 and 58 is increased.

Further, as described above, at least one of the mounting portions 57 and 58 may be formed integrally with the shaft 54. With such a configuration, at least one of the mounting portions 57 and 58 can be easily formed. Further, since the work of fixing at least one of the mounting portions 57 and 58 to the shaft 54 is not required, the robot 10 can be easily assembled. Further, since at least one of the mounting portions 57 and 58 is not deviated with respect to the shaft 54, the drive of the robot 10 is stably performed for a long period of time.

Further, as described above, the robot 10 includes the restriction portion 500 that restricts the deviation of the fourth arm 124 and the third arm 123 in a direction along the rotation axis A4. According to such a configuration, a decrease in the positional accuracy due to the deviation of the fourth arm 124 and the third arm 123 in the direction along the rotation axis A4 can be suppressed. In addition, twisting of each portion can be effectively suppressed, and drive of the robot 10 is stably performed for a long period of time.

In addition, as described above, the fourth arm 124 is positioned on the distal end side of the robot arm 120 with respect to the third arm 123. With such a configuration, the fourth arm 124 can be easily attached and detached.

In addition, as described above, the fourth arm 124 includes a pair of shaft holding portions 55 and 56 disposed on the shaft 54 and spaced apart from each other in the direction along the rotation axis A4. The shaft 54 is fixed to the third arm 123 via the mounting portion 57 at a portion between the pair of shaft holding portions 55 and 56. According to such a configuration, a central portion of the shaft 54 is supported by the third arm 123, and thus the shaft 54 is less likely to be bent. Therefore, the rotation axis A4 is less likely to shake, and rotation of the fourth arm 124 is stable.

### Second Embodiment

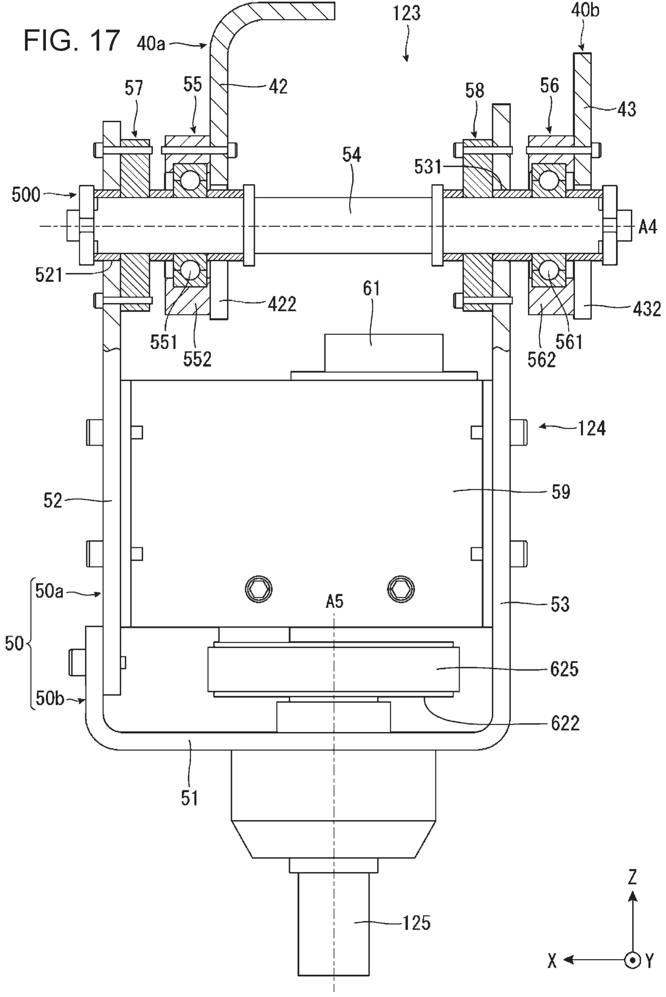

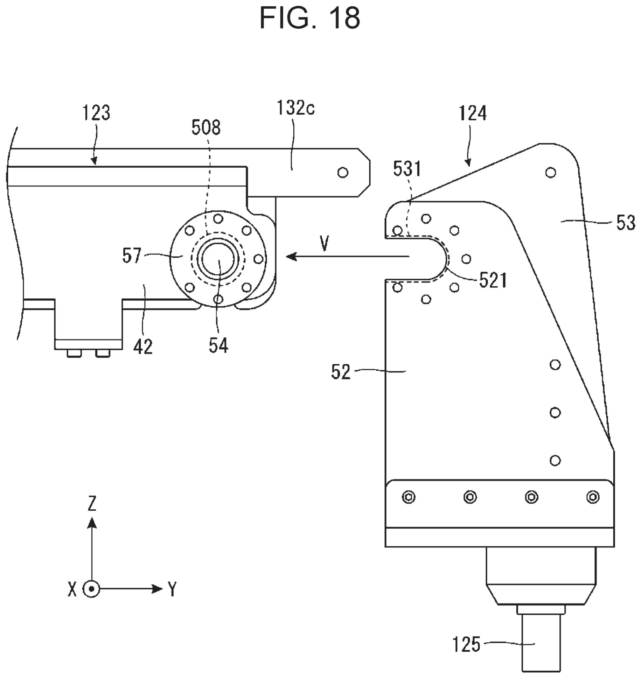

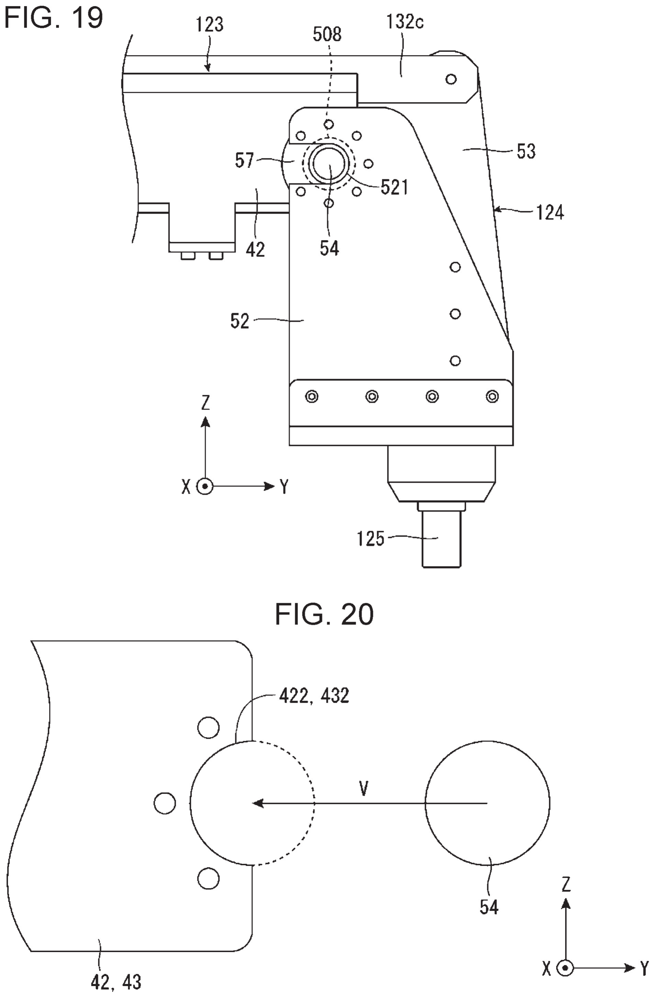

FIG. 17 is a partial cross-sectional view of a fourth arm included in a robot according to a second embodiment. FIGS. 18 and 19 are side views illustrating a procedure of mounting the fourth arm on the third arm.

The present embodiment is mainly the same as the first embodiment described above except that the configuration of the third arm 123 and the fourth arm 124 is different. In the following description, the present embodiment will be described with focus given to a difference from the first embodiment described above, and description of the same matters will not be repeated. In addition, in each of the drawings of the present embodiment, the same reference numerals are assigned to the same configurations as those of the embodiment described above. In the present embodiment, unlike the first embodiment described above, the fourth arm 124 is the "second arm" of the present disclosure, and the third arm 123 is the "first arm" of the present disclosure.

In a robot 10 of the present embodiment, as illustrated in FIG. 17, the shaft 54 is rotatably held by the third arm 123 via a pair of shaft holding portions 55 and 56 in a state of being inserted into the shaft insertion holes 422 and 432 of the third arm. Specifically, the shaft 54 is screwed to the side plate portion 42 around the shaft insertion hole 422 via the shaft holding portion 55, and is screwed to the side plate portion 43 around the shaft insertion hole 432 via the shaft holding portion 56. In the case of the present embodiment, the shaft insertion holes 422 and 432 may be closed holes.

Further, the third arm 123 includes a pair of mounting portions 57 and 58 disposed on the shaft 54. One mounting portion 57 is positioned on an outer side of the shaft holding portion 55, that is, on the positive side in the X-axis direction, and the other mounting portion 58 is positioned between the shaft holding portions 55 and 56. That is, the mounting portion 57, the shaft holding portion 55, the mounting portion 58, and the shaft holding portion 56 are disposed side by side in this order on the shaft 54 from the positive side in the X-axis direction. However, the disposition of the shaft holding portions 55 and 56 and the mounting portions 57 and 58 is not particularly limited.

The shaft 54 is detachably coupled to the fourth arm 124 via the mounting portions 57 and 58. Specifically, the mounting portion 57 is screw-fixed to the side plate portion 52 by a plurality of screws around the shaft 54 in a state in which the shaft 54 is inserted into the notch-shaped shaft insertion holes 521 and 531 formed in the fourth arm 124, and the mounting portion 58 is screw-fixed to the side plate portion 53 by a plurality of screws around the shaft 54. By forming the mounting portions 57 and 58 in a flange shape, the configuration of the mounting portions 57 and 58 is simplified, and the mounting portions 57 and 58 are easily fixed to the fourth arm 124 around the shaft 54. However, the present disclosure is not limited to this, and for example, at least one of the mounting portions 57 and 58 may be formed integrally with the shaft 54. In the present embodiment, it is preferable that the mounting portion 57 is not integrally formed with the shaft 54 and only the mounting portion 58 is integrally formed with the shaft 54 such that the bearing portion 551 can be easily inserted around the shaft 54.

A procedure of attaching the fourth arm 124 to the third arm 123 will be described. First, as illustrated in FIG. 18, the fourth arm 124 is displaced in the radial direction V of the shaft 54 with respect to the shaft 54 disposed in the third arm 123, and the shaft insertion holes 521 and 531 of the fourth arm 124 are inserted around the shaft 54. As illustrated in FIG. 19, the outer peripheral surface of the shaft 54 is brought to abut against and come into contact with the bottom portions of the shaft insertion holes 521 and 531. As a result, positioning of the fourth arm 124 with respect to the shaft 54 is performed, and the fourth arm 124 can be disposed at a correct position with respect to the rotation axis A4. Next, the mounting portions 57 and 58 and the arm base 50 are screw-fixed while maintaining this state. That is, the mounting portion 57 and the side plate portion 52 are screwed, and the mounting portion 58 and the side plate portion 53 are screwed. As described above, the fourth arm 124 is attached to the third arm 123. When the fourth arm 124 is detached from the third arm 123, a reverse procedure may be performed. As described above, the fourth arm 124 can be attached to and detached from the third arm 123 only by attaching and detaching the screw to and from the arm base 50. Therefore, the assemblability and the maintainability of the robot 10 are improved. Further, since only the fourth arm 124 can be detached, the maintainability of the fourth arm 124 is improved.

As described above, the robot 10 of the present embodiment includes the robot arm 120 including the third arm 123 that is a first arm, and the fourth arm 124 that is a second arm coupled to the third arm 123 and rotates around the rotation axis A4 which is the first rotation axis with respect to the third arm 123. The third arm 123 includes the shaft 54 along the rotation axis A4 and the mounting portions 57 and 58 that are disposed on the shaft 54 and detachably coupled to the fourth arm 124. The fourth arm 124 includes the shaft insertion holes 521 and 531 having a notch shape into which the shaft 54 is inserted from the radial direction V of the shaft 54 and configured to position the shaft 54 with respect to the fourth arm 124. The shaft 54 is coupled to the fourth arm 124 via the mounting portions 57 and 58 in a state in which the shaft 54 is positioned by the shaft insertion holes 521 and 531, and rotates with respect to at least one of the third arm 123 and the fourth arm 124 (in the present embodiment, the third arm 123). With such a configuration, the fourth arm 124 can be easily attached to and detached from the third arm 123. Therefore, the assemblability and the maintainability of the robot 10 are improved.

In addition, as described above, the fourth arm 124 is positioned on the distal end side of the robot arm 120 with respect to the third arm 123. According to such a configuration, the fourth arm can be easily attached and detached.

Even in such a second embodiment, the same effect as that of the first embodiment described above can be exhibited.

Hereinbefore, the robot of the present disclosure is described with reference to the illustrated embodiments, but the present disclosure is not limited thereto. In addition, each portion of the robot can be replaced with any structure that can exhibit the same function. In addition, any structure may be added to the robot.

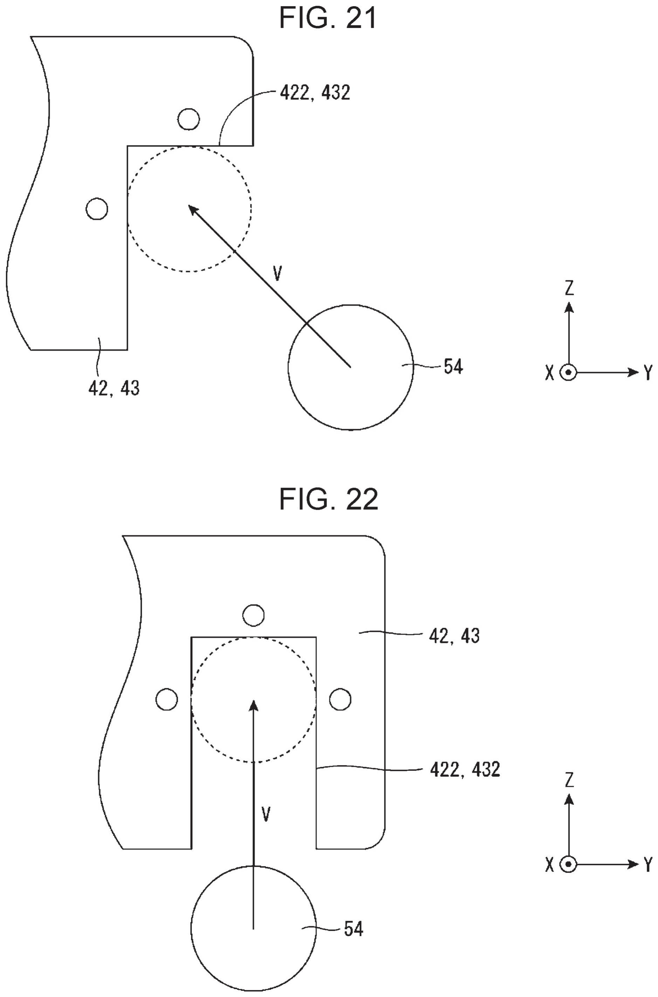

In addition, for example, the shapes of the shaft insertion holes 422 and 432 in the first embodiment described above are not particularly limited as long as the shaft 54 can be inserted and the shaft 54 can be positioned by surface contact or point contact at two or more separated locations. For example, the shapes may be as illustrated in FIGS. 20 to 22. The shaft insertion holes 422 and 432 in FIG. 20 are semicircular notches that are open through distal end surfaces of the side plate portions 42 and 43. With such a configuration, the shaft 54 can be disposed at the foremost end of the third arm 123. Therefore, the separation distance between the rotation axis A2 and the rotation axis A3 can be increased while suppressing a total length of the arm 123. Further, the shaft insertion holes 422 and 432 in FIG. 21 are rectangular notches that are open through distal end surfaces and lower surfaces of the side plate portions 42 and 43. According to such a configuration, openings of the shaft insertion holes 422 and 432 are widened, and the shaft 54 can be easily inserted into the shaft insertion holes 422 and 432. The shaft insertion holes 422 and 432 in FIG. 22 are rectangular notches that are open through the lower surface of the side plate portions 42 and 43.

Further, for example, the mounting portions 57 and 58 may also have a bearing structure similar to the shaft holding portions 55 and 56, and the shaft 54 may be rotatable with respect to both the third arm 123 and the fourth arm 124.

## Claims

1. A robot comprising:
a robot arm including a first arm and a second arm that is coupled to the first arm and rotates around a first rotation axis with respect to the first arm, wherein
the first arm includes a shaft along the first rotation axis and a mounting portion that is disposed on the shaft and detachably coupled to the second arm,
the second arm has a notch-shaped shaft insertion hole into which the shaft is inserted from a radial direction of the shaft and which positions the shaft with respect to the second arm, and
the shaft is coupled to the second arm via the mounting portion and rotates with respect to at least one of the first arm and the second arm in a state in which the shaft is positioned by the shaft insertion hole.

2. The robot according to claim 1, wherein
the mounting portion has a flange shape that protrudes in the radial direction of the shaft with respect to the shaft.

3. The robot according to claim 2, wherein
the mounting portion is formed integrally with the shaft.

4. The robot according to claim 2, wherein
the mounting portion is formed separately from the shaft.

5. The robot according to claim 1, further comprising:
a restriction portion that restricts a deviation of the first arm and the second arm in a direction along the first rotation axis.

6. The robot according to claim 1, wherein
the first arm is positioned on a distal end side of the robot arm with respect to the second arm.

7. The robot according to claim 1, wherein
the second arm is positioned on a distal end side of the robot arm with respect to the first arm.

8. The robot according to claim 1, wherein
the first arm includes a pair of shaft holding portions that are disposed on the shaft and spaced apart from each other in a direction along the first rotation axis, and
the shaft is fixed to the second arm via the mounting portion at a portion between the pair of shaft holding portions.
